# EUROPÄISCHE PATENTSCHRIFT

(11) **EP 1 648 956 B1**
(45) Veröffentlichungstag und Bekanntmachung des Hinweises auf die Patenterteilung: **21.03.2007**
(21) Anmeldenummer: 04741213.5
(22) Anmeldetag: 22.07.2004
(51) Int. Cl.: C08J 7/04, C08J 3/24, A61L 15/24, A61L 15/60, B01J 20/26, B01J 20/32

(54) **VERFAHREN ZUR AGGLOMERATION VON SUPERABSORBERFEINTEILCHEN**
METHOD FOR THE AGGLOMERATION OF FINE SUPERABSORBER PARTICLES
PROCEDE POUR AGGLOMERER DES PARTICULES FINES SUPERABSORBANTES

(30) Priorität: 25.07.2003 DE 10334271
(43) Veröffentlichungstag der Anmeldung: 26.04.2006
(73) Patentinhaber: Stockhausen GmbH, 47805 Krefeld (DE)
(72) Erfinder: FRANK, Markus, 76532 Baden-Baden (DE)
(74) Vertreter: Herzog, Martin
(86) Internationale Anmeldenummer: PCT/EP2004/008183
(87) Internationale Veröffentlichungsnummer: WO 2005/012406

(56) Entgegenhaltungen:
- EP-A- 0 695 763
- WO-A-01/89591
- DE-A- 3 741 158
- DE-A- 4 333 056

## Beschreibung

Die vorliegende Erfindung betrifft ein Verfahren zur Herstellung eines agglomerierten Superabsorberpartikels, durch dieses Verfahren erhältliche Superabsorberpartikel, Superabsorberpartikel umfassend Superabsorberfeinteilchen, einen Verbund beinhaltend Superabsorberpartikel und ein Substrat, ein Verfahren zur Herstellung eines Verbundes, ein durch dieses Verfahren erhältlichen Verbund, chemische Produkte beinhaltend die erfindungsgemäßen Superabsorberpartikel oder den erfindungsgemäßen Verbund, die Verwendung der erfindungsgemäßen Superabsorberpartikel oder des erfindungsgemäßen Verbundes in chemischen Produkten, die Verwendung eines nicht vernetzten Polymers sowie die Verwendung eines Fluids beinhaltend ein nicht vernetztes Polymer.

Superabsorbierende Polymere besitzen die Fähigkeit, große Mengen an wässrigen Flüssigkeit aufzunehmen. Sie werden daher in großem Umfang in Hygieneartikeln wie etwa Windeln oder Damenbinden eingesetzt.

Die Herstellung der superabsorbierenden Polymer erfolgt vorzugsweise durch Umkehrphasensuspensionspolymerisation, durch Umkehrphasenemulsionspolymerisation, durch wässrige Lösungspolymerisation oder durch Lösungspolymerisation in einen organischen Lösemittel. Die auf diese Weise erhaltenen superabsorbierenden Polymere werden getrocknet und anschließend gegebenenfalls pulverisiert.

Die durch die vorstehend genannten Polymerisationsverfahren erhältlichen Superabsorberpartikel sind unter anderem dadurch gekennzeichnet, dass sie einen nicht zu vernachlässigenden Anteil an Feinteilchen umfassen, wobei als Feinteilchen definitionsgemäß Partikel mit einer mittleren Partikelgröße von weniger als 55 µm verstanden werden. Der Anteil dieser Feinteile kann, je nach Herstellungsverfahren der Superabsorber, bis zu 35 Gew.-% betragen. Die Feinteilchen sind bei der Herstellung von Hygieneartikel nicht nur schwer zu handhaben, sie sind auch durch eine besonders starke Neigung zum Stauben gekennzeichnet, was insbesondere im Hinblick auf die Gesundheit des bei der Herstellung derartiger Artikel eingesetzten Arbeitspersonals problematisch ist. Aus diesem Grund werden die Superabsorberpartikel vor ihrem Einsatz bei der Herstellung von Hygieneartikeln durch Sieben aufgearbeitet, wobei die Feinteilchen mit einer Partikelgröße von weniger als 150 µm abgetrennt werden.

In der Literatur werden einige Verfahren beschrieben, mit denen die auf diese Weise abgetrennten Superabsorberfeinteilchen zu größeren Partikelstrukturen agglomeriert und somit dem Verfahren zur Herstellung von Hygieneartikeln zurückgeführt werden können.

DE-A-40 21 847, EP-A-0 721 354 und EP-A-0 513 780 beschreiben die vernetzende Polymerisation von hydrophilen Monomeren in wässriger Lösung unter Zusatz von Superabsorberfeinteilchen. Es entsteht ein Gel, das zerkleinert, getrocknet, gemahlen und gesiebt werden muss.

EP-A-0 692 514 beschreibt das Agglomerieren von Superabsorberfeinteilchen durch Imprägnieren der Teilchen mit einer polymerisierbaren wässrigen Lösung eines Acrylmonomeren und eines Vernetzers mit anschließender Polymerisation durch Erhitzen.

WO-A-91/15177 beschreibt ein Verfahren, bei dem absorbierende Präcurser-Partikel mit einem interpartikulär vemetzenden Mittel vernetzt werden. Bei diesem interpartikulär vernetzenden Mittel handelt es sich um nichtpolymere, polyfunktionelle Verbindungen wie Polyisocyanate, Polyamine oder Polyalkohole.

EP-A-0 522 570 beschreibt die Agglomeration von Superabsorberfeinteilchen, in dem die Teilchen mit einer polymerisierbaren Monomerlösung gemischt durch Suspensionspolymerisation hergestellt werden.

DE-A-37 41 158 beschreibt die Agglomeration von Superabsorberfeinteilchen mit einer Lösung oder Dispersion beinhaltend ein Agglomerierungshilfsmittel, wobei als Agglomerierungshilfsmittel auch wässrige Lösungen nichtvemetzter Polyacrylate eingesetzt werden. Ein zusätzlicher Vernetzer für die Polymerisate wird nicht eingesetzt. Die Lösungen werden bevorzugt in der Wirbelschicht aufgebracht. Der Nachteil des in diesem Stand der Technik beschriebenen Verfahren liegt darin, dass die Stabilität der Agglomerate unter mechanischem Stress sehr gering ist.

JP-06 313 042 und JP-06 313 044 beschreiben ein Verfahren, bei dem absorbierenden Feinteilchen mit einer Lösung beinhaltend ein Bindemittel sowie einen Vernetzer in Kontakt gebracht werden. Bei dem Bindemittel handelt es sich um Lösungen wasserlöslicher Polymere, wie etwa Polyacrylatlösungen. Die in diesen Verfahren als Bindemittel eingesetzten wässrigen Lösungen enthalten maximal 10 Gew.-% des wasserlöslichen Polymers. Der Nachteil des in diesem Stand der Technik beschriebenen Verfahren liegt darin, dass nach der Agglomeration noch immer signifikante Mengen an Fines vorliegen, die nicht agglomeriert sind.

Die Aufgabe, die der vorliegenden Erfindung zugrunde lag, bestand allgemein darin, die sich aus dem Stand der Technik ergebenden Nachteile zu überwinden.

Eine weitere, der vorliegenden Erfindung zugrunde liegende Aufgabe bestand darin, ein Verfahren bereitzustellen, mit dem Superabsorberpartikel durch Agglomeration von Superabsorberfeinteilchen erhalten werden können, wobei diese Superabsorberpartikel gegenüber den aus dem Stand der Technik bekannten, aus Superabsorberfeinteilchen erhältlichen Agglomeraten in ihren Eigenschaften, insbesondere in ihren Absorptionseigenschaften sowie hinsichtlich ihrer Stabilität gegenüber mechanischer Beanspruchung, nicht nachstehen.

Ferner bestand eine erfindungsgemäße Aufgabe darin, Superabsorberpartikel, die durch Agglomeration von Superabsorberfeinteilchen erhalten werden können, bereit zu stellen, die sich für die Einarbeitung in Hygieneartikel gut eignen.

Zudem bestand eine erfindungsgemäße Aufgabe darin, Superabsorberpartikel, die durch Agglomeration von Superabsorberfeinteilchen erhalten werden können, bereit zu stellen, die sich problemlos, insbesondere mit vermindertem Auftreten von Verbackungen und Stauungen, genau bei der Einarbeitung in Hygieneartikel dosieren lassen.

Gelöst wurden diese Aufgaben durch ein Verfahren zur Herstellung von Superabsorberpartikeln, umfassend als Schritte
(A) das in Kontakt bringen von Superabsorberfeinteilchen, die zu mindestens 40 Gew.-%, vorzugsweise zu mindestens 70 Gew.-%, besonders bevorzugt zu mindestens 80 Gew.-% und ferner bevorzugt zu mindestens 90 Gew.-% eine Partikelgröße von weniger als 150 µm, bestimmt gemäß ERT 420.1-99, aufweisen, mit einem Fluid beinhaltend mehr als 10 Gew.-%, vorzugsweise mehr als 15 Gew.-%, besonders bevorzugt mehr als 17 Gew.-%, darüber hinaus bevorzugt mehr als 20 Gew.-% und ferner bevorzugt mehr als 25 Gew.-%, jeweils bezogen auf das Gesamtgewicht des Fluids, eines vernetzbaren, nicht vernetzten Polymers, welches zu mindestens 20 Gew.-%, vorzugsweise zu mindestens 50 Gew.-%, besonders bevorzugt zu mindestens 80 Gew.-% und ferner bevorzugt zu mindestens 90 Gew.-%, jeweils bezogen auf das Gesamtgewicht des vernetzbaren, nicht vernetzten Polymers, auf polymerisierten, ethylenisch ungesättigten, säuregruppentragenden Monomeren oder deren Salzen basiert,
(B) das Vernetzen des nicht vernetzten Polymers durch Erhitzen der mit dem Fluid in Kontakt gebrachten Superabsorberfeinteilchen auf eine Temperatur in einem Bereich von 20 bis 300°C, bevorzugt in einem Bereich von 50 bis 250°C und besonders bevorzugt in einem Bereich von 100 bis 200°C, so dass, bevorzugt wodurch, das vernetzbare, nicht vernetzte Polymer mindestens teilweise vernetzt wird,
wobei
(a) das vernetzbare, nichtvemetzte Polymer neben den polymerisierten, ethylenisch ungesättigten, säuregruppentragenden Monomeren weitere polymerisierte, ethylenisch ungesättigte Monomere (M) umfasst, die mit polymerisierten säuregruppentragenden Monomeren in einer Kondensationsreaktion, in einer Additionsreaktion oder in einer Ringöffnungsreaktion reagieren können, und/oder
(b) das Fluid neben dem vernetzbaren, nicht vernetzten Polymer einen Vernetzer beinhaltet.

Die in den vorstehend beschriebenen, erfindungsgemäßen Verfahren eingesetzten Superabsorberfeinteilchen basieren vorzugsweise auf
(α1) 0,1 bis 99,999 Gew.-%, bevorzugt 20 bis 98,99 Gew.-% und besonders bevorzugt 30 bis 98,95 Gew.-% polymerisierten, ethylenisch ungesättigten, säuregruppenhaltigen Monomeren oder deren Salze oder polymerisierten, ethylenisch ungesättigten, einen protonierten oder quarternierten Stickstoff beinhaltenden Monomeren, oder deren Mischungen, wobei mindestens ethylenisch ungesättigte, säuregruppenhaltige Monomere, vorzugsweise Acrylsäure, beinhaltende Mischungen besonders bevorzugt sind,
(α2) 0 bis 70 Gew.-%, bevorzugt 1 bis 60 Gew.-% und besonders bevorzugt 1 bis 40 Gew.-% polymerisierten, ethylenisch ungesättigten, mit (α1) copolymerisierbaren Monomeren,
(α3) 0,001 bis 10 Gew.-%, bevorzugt 0,01 bis 7 Gew.-% und besonders bevorzugt 0,05 bis 5 Gew.-% eines oder mehrerer Vernetzer,
(α4) 0 bis 30 Gew.-%, bevorzugt 1 bis 20 Gew.-% und besonders bevorzugt 5 bis 10 Gew.-% wasserlöslichen Polymeren, sowie
(α5) 0 bis 20 Gew.-%, bevorzugt 0,01 bis 7 Gew.-% und besonders bevorzugt 0,05 bis 5 Gew.-% eines oder mehrerer Hilfsstoffe, wobei die Summe der Gewichtsmengen (α1) bis (α5) 100 Gew.-% beträgt.

Die monoethylenisch ungesättigten, säuregruppenhaltigen Monomere (α1) können teilweise oder vollständig, bevorzugt teilweise neutralisiert sein. Vorzugsweise sind die monoethylenisch ungesättigten, säuregruppenhaltigen Monomere zu mindestens 25 Mol-%, besonders bevorzugt zu mindestens 50 Mol-% und darüber hinaus bevorzugt zu 50-90 Mol-% neutralisiert. Die Neutralisation der Monomere (α1) kann vor auch nach der Polymerisation erfolgen. Ferner kann die Neutralisation mit Alkalimetallhydroxiden, Erdalkalimetallhydroxiden, Ammoniak sowie Carbonaten und Bicarbonaten erfolgen. Daneben ist jede weitere Base denkbar, die mit der Säure ein wasserlösliches Salz bildet. Auch eine Mischneutralisation mit verschiedenen Basen ist denkbar. Bevorzugt ist die Neutralisation mit Ammoniak oder mit Alkalimetallhydroxiden, besonders bevorzugt mit Natriumhydroxid oder mit Ammoniak.

Ferner können bei einem Polymer die freien Säuregruppen überwiegen, so dass dieses Polymer einen im sauren Bereich liegenden pH-Wert aufweist. Dieses saure wasserabsorbierende Polymer kann durch ein Polymer mit freien basischen Gruppen, vorzugsweise Amingruppen, das im Vergleich zu dem sauren Polymer basisch ist, mindestens teilweise neutralisiert werden. Diese Polymere werden in der Literatur als *"Mixed-Bed Ion-Exchange Absorbent Polymers"* (MBIEA-Polymere) bezeichnet und sind unter anderem in der WO 99/34843 offenbart. In der Regel stellen MBIEA-Polymere eine Zusammensetzung dar, die zum einen basische Polymere, die in der Lage sind, Anionen auszutauschen, und andererseits ein im Vergleich zu dem basischen Polymer saures Polymer, das in der Lage ist, Kationen auszutauschen, beinhalten. Das basische Polymer weist basische Gruppen auf und wird typischerweise durch die Polymerisation von Monomeren erhalten, die basische Gruppen oder Gruppen tragen, die in basische Gruppen umgewandelt werden können. Bei diesen Monomeren handelt es sich vor allen Dingen um solche, die primäre, sekundäre oder tertiäre Amine oder die entsprechenden Phosphine oder mindestens zwei der vorstehenden funktionellen Gruppen aufweisen. Zu dieser Gruppe von Monomeren gehören insbesondere Ethylenamin, Allylamin, Diallylamin, 4-Aminobuten, Alkyloxycycline, Vinylformamid, 5-Aminopenten, Carbodiimid, Formaldacin, Melamin und dergleichen, sowie deren sekundäre oder tertiäre Aminderivate.

Bevorzugte monoethylenisch ungesättigte, säuregruppenhaltige Monomere (α1) sind Acrylsäure, Methacrylsäure, Ethacrylsäure, α-Chloracrylsäure, α-Cyanoacrylsäure; β-Methylacrylsäure (Crotonsäure), α-Phenylacrylsäure, β-Acryloxypropionsäure, Sorbinsäure, α-Chlorsorbinsäure, 2'-Methylisocrotonsäure, Zimtsäure, p-Chlorzimtsäure, β-Stearylsäure, Itaconsäure, Citraconsäure, Mesaconsäure, Glutaconsäure, Aconitsäure, Maleinsäure, Fumarsäure, Tricarboxyethylen und Maleinsäureanhydrid, wobei Acrylsäure sowie Methacrylsäure besonders und Acrylsäure darüber hinaus bevorzugt sind.

Neben diesen carboxylatgruppenhaltigen Monomeren sind als monoethylenisch ungesättigte, säuregruppenhaltige Monomere (α1) des Weiteren ethylenisch ungesättigte Sulfonsäuremonomere oder ethylenisch ungesättigte Phosphonsäuremonomere bevorzugt.

Als ethylenisch ungesättigte Sulfonsäuremonomere sind Allylsulfonsäure oder aliphatische oder aromatische Vinylsulfonsäuren oder acrylische oder methacrylische Sulfonsäuren bevorzugt. Als aliphatische oder aromatische Vinylsulfonsäuren sind Vinylsulfonsäure, 4-Vinylbenzylsulfonsäure, Vinyltoluolsulfonsäure und Stryrolsulfonsäure bevorzugt. Als Acryl- bzw. Methacrylsulfonsäuren sind Sulfoethyl(meth)acrylat, Sulfopropyl(meth)acrylat, 2-Hydroxy-3-methacryloxypropylsulfonsäure sowie (Meth)Acrylamidoalkylsulfonsäuren wie 2-Acrylamido-2-methylpropansulfonsäure bevorzugt.

Als ethylenisch ungesättigte Phosphonsäuremonomere sind Vinylphosphonsäure, Allylphosphonsäure, Vinylbenzylphosponsäure, (Meth)acrylamidoalkylphosphonsäuren, Acrylamidoalkyldiphosphonsäuren, phosponomethylierte Vinylamine und (Meth)acrylphosphonsäurederivate bevorzugt.

Es ist erfindungsgemäß bevorzugt, dass das Polymer zu mindestens 50 Gew.-%, vorzugsweise zu mindestens 70 Gew.-% und darüber hinaus bevorzugt zu mindestens 90 Gew.-% auf carboxylatgruppenhaltigen Monomeren besteht Es ist erfindungsgemäß besonders bevorzugt, dass das Polymer zu mindestens 50 Gew.-%, vorzugsweise zu mindestens 70 Gew.-% aus Acrylsäure besteht, die vorzugsweise zu mindestens 20 Mol-%, besonders bevorzugt zu mindestens 50 Mol-% neutralisiert ist.

Als ethylenisch ungesättigte, einen protonierten Stickstoff enthaltende Monomere (α1) sind vorzugsweise Dialkylaminoalkyl(meth)acrylate in protonierter Form, beispielsweise Dimethylaminoethyl(meth)acrylat-Hydrochlorid oder Dimethylaminoethyl(meth)acrylat-Hydrosulfat, sowie Dialkylaminoalkyl-(meth)acrylamide in protonierter Form, beispielsweise Dimethylaminoethyl(meth)acrylamid-Hydrochlorid, Diemethylaminopropyl(meth)acrylamid-Hydrochlorid, Diemethylaminopropyl(meth)acrylamid-Hydrosulfat oder Dimethylaminoethyl(meth)acrylamid-Hydrosulfat bevorzugt.

Als ethylenisch ungesättigte, einen quartemierten Stickstoff enthaltende Monomere (α1) sind Dialkylammoniumalkyl(meth)acrylate in quarternisierter Form, beispielsweise Trimethylammoniumethyl(meth)acrylat-Methosulfat oder Dimethylethylammoniumethyl(meth)acrylat-Ethosulfat sowie (Meth)acrylamidoalkyldialkylamine in quarternisierter Form, beispielsweise (Meth)acrylamidopropyltrimethylammoniumchlorid, Trimethylammoniumethyl(meth)acrylat-Chlorid oder (Meth)acrylamidopropyltrimethylammoniumsulfat bevorzugt.

Als monoethylenisch ungesättigte, mit (α1) copolymerisierbare Monomere (α2) sind Acrylamide und Methacrylamide bevorzugt.

Bevorzugte (Meth)acrylamide sind neben Acrylamid und Methacrylamid alkylsubstituierte (Meth)acrylamide oder aminoalkylsubstituierte Derivate des (Meth)acrylamids, wie N-Methylol(meth)acrylamid, N,N-Dimethylamino(meth)-acrylamid, Dimethyl(meth)acrylamid oder Diethyl(meth)acrylamid Mögliche Vinylamide sind beispielsweise N-Vinylamide, N-Vinylformamide, N-Vinylacetamide, N-Vinyl-N-Methylacetamide, N-Vinyl-N-methylformamide, Vinylpyrrolidon. Unter diesen Monomeren besonders bevorzugt ist Acrylamid.

Des Weiteren sind als monoethylenisch ungesättigte, mit (α1) copolymerisierbaren Monomere (α2) in Wasser dispergierbare Monomere bevorzugt. Als in Wasser dispergierbare Monomere sind Acrylsäurester und Methacrylsäurester, wie Methyl(meth)acrylat, Ethyl(meth)acrylat, Propyl(meth)acrylat oder Butyl(meth)acrylat, sowie Vinylacetat, Styrol und Isobutylen bevorzugt.

Erfindungsgemäß bevorzugte Vernetzer (α3) sind Verbindungen, die mindestens zwei ethylenisch ungesättigte Gruppen innerhalb eines Moleküls aufweisen (Vernetzerklasse I), Verbindungen, die mindestens zwei funktionelle Gruppen aufweisen, die mit funktionellen Gruppen der Monomeren (α1) oder (α2) in einer Kondensationsreaktion (=Kondensationsvemetzer), in einer Additionsreaktion oder in einer Ringöffnungsreaktion reagieren können (Vernetzerklasse II), Verbindungen, die mindestens eine ethylenisch ungesättigte Gruppe und mindestens eine funktionelle Gruppe, die mit funktionellen Gruppen der Monomeren (α1) oder (α2) in einer Kondensationsreaktion, in einer Additionsreaktion oder in einer Ringöffnungsreaktion reagieren kann (Vernetzerklasse III), aufweisen, oder polyvalente Metallkationen (Vernetzerklasse IV). Dabei wird durch die Verbindungen der Vernetzerklasse I eine Vernetzung der Polymere durch die radikalische Polymerisation der ethylenisch ungesättigten Gruppen des Vernetzermoleküls mit den monoethylenisch ungesättigten Monomeren (α1) oder (α2) erreicht, während bei den Verbindungen der Vernetzerklasse II und den polyvalenten Metallkationen der Vernetzerklasse IV eine Vernetzung der Polymere durch Kondensationsreaktion der funktionellen Gruppen (Vernetzerklasse II) bzw. durch elektrostatische Wechselwirkung des polyvalenten Metallkations (Vernetzerklasse IV) mit den funktionellen Gruppen der Monomere (α1) oder (α2) erreicht wird. Bei den Verbindungen der Vernetzerklasse III erfolgt dementsprechend eine Vernetzung des Polymers sowohl durch radikalische Polymerisation der ethylenisch ungesättigten Gruppe als auch durch Kondensationsreaktion zwischen der funktionellen Gruppe des Vernetzers und den funktionellen Gruppen der Monomeren (α1) oder (α2).

Bevorzugte Verbindungen der Vernetzerklasse I sind Poly(meth)acrylsäureester, die beispielsweise durch die Umsetzung eines Polyols, wie beispielsweise Ethylenglykol, Propylenglykol, Trimethylolpropan, 1,6-Hexandiol, Glycerin, Pentaerythrit, Polyethylenglykol oder Polypropylenglykol, eines Aminoalkohols, eines Polyalkylenpolyaminens, wie beispielsweise Diethylentriamin oder Triethylentetraamin, oder eines alkoxylierten Polyols mit Acrylsäure oder Methacrylsäure gewonnen werden. Als Verbindungen der Vernetzerklasse I sind des Weiteren Polyvinylverbindungen, Poly(meth)allyverbindungen, (Meth)acrylsäureester einer Monovinylverbindung oder (Meth)acrylsäureester einer Mono(meth)allyl- verbindung, vorzugsweise der Mono(meth)allylverbindungen eines Polyols oder eines Aminoalkohols, bevorzugt. In diesem Zusammenhang wird auf DE 195 43 366 und DE 195 43 368 verwiesen. Die Offenbarungen werden hiermit als Referenz eingeführt und gelten somit als Teil der Offenbarung.

Als Verbindungen der Vernetzerklasse I seien als Beispiel genannt Alkenyldi(meth)acrylate, beispielsweise Ethylenglykoldi(meth)acrylat, 1,3-Propylenglykoldi(meth)acrylat, 1,4-Butylenglykoldi(meth)acrylat, 1,3-Butylenglykoldi(meth)acrylat, 1,6-Hexandioldi(meth)acrylat, 1,10-Decandioldi(meth)acrylat, 1,12-Dodecandioldi(meth)acrylat, 1,18-Octadecandioldi(meth)acrylat, Cyclopentandioldi(meth)acrylat, Neopentylglykoldi(meth)acrylat, Methylendi(meth)acrylat oder Pentaerythritdi(meth)acrylat, Alkenyldi(meth)acrylamide, beispielsweise N-Methyldi(meth)acrylamid, N,N'-3-Methylbutylidenbis(meth)acrylamid, N,N'-(1,2-Di-hydroxyethylen)bis(meth)acrylamid, N,N'-Hexamethylenbis(meth)acrylacrylamid oder N,N'-Methylenbis(meth)acrylamid, Polyalkoxydi(meth)acrylate, beispielsweise Diethylenglykoldi(meth)acrylat, Triethylenglykoldi(meth)acrylat, Tetraethylenglykoldi(meth)acrylat, Dipropylenglykoldi(meth)acrylat, Tripropylenglykoldi(meth)acrylat oder Tetrapropylenglykoldi(meth)acrylat, Bisphenol-A-di(meth)acrylat, ethoxyliertes Bisphenol-A-di(meth)acrylat, Benzylidindi(meth)acrylat, 1,3-Di(meth)acryloyloxy-propanol-2, Hydrochinondi(meth)acrylat, Di(meth)acrylatester des vorzugsweise mit 1 bis 30 Mol Alkylenoxid pro Hydroxylgruppe oxyalkylierten, vorzugsweise ethoxylierten Trimethylolpropans, Thioethylenglykoldi(meth)acrylat, Thiopropylenglykoldi(meth)acrylat, Thiopolyethylenglykoldi(meth)acrylat, Thiopolypropylenglykoldi(meth)acrylat, Divinylether, beispielsweise 1,4-Butandioldivinylether, Divinylester, beispielsweise Divinyladipat, Alkandiene, beispielsweise Butadien oder 1,6-Hexadien, Divinylbenzol, Di(meth)allylverbindungen, beispielsweise Di(meth)allylphthalat oder Di(meth)allylsuccinat, Homo- und Copolymere von Di(meth)allyldimethylammoniumchlorid und Homo- und Copolymere von Diethyl(meth)allylaminomethyl(meth)acrylat-ammoniumchlorid, Vinyl-(meth)acryl-Verbindungen, beispielsweise Vinyl(meth)acrylat, (Meth)allyl-(meth)acryl-Verbindungen, beispielsweise (Meth)allyl(meth)acrylat, mit 1 bis 30 Mol Ethylenoxid pro Hydroxylgruppe ethoxyliertes (Meth)allyl(meth)acrylat, Di(meth)allylester von Polycarbonsäuren, beispielsweise Di(meth)allylmaleat, Di(meth)allyfumarat, Di(meth)allylsuccinat oder Di(meth)allylterephthalat, Verbindungen mit 3 oder mehr ethylenisch ungesättigten, radikalisch polymerisierbaren Gruppen wie beispielsweise Glycerintri(meth)acrylat, (Meth)acrylatester des mit vorzugsweise 1 bis 30 Mol Ethylenoxid pro Hydroxylgruppe oxyethylierten Glycerins, Trimethylolpropantri(meth)acrylat, Tri(meth)acrylatester des vorzugsweise mit 1 bis 30 Mol Alkylenoxid pro Hydroxylgruppe oxyalkylierten, vorzugsweise ethoxylierten Trimethylolpropans, Trimethacrylamid, (Meth)allylidendi(meth)acrylat, 3-Allyloxy-1,2-propandioldi(meth)acrylat, Tri- (meth)allylcyanurat, Tri(meth)allylisocyanurat, Pentaerythrittetra(meth)acrylat, Pentaerythrittri(meth)acrylat, (Meth)acrylsäureester des mit vorzugsweise 1 bis 30 Mol Ethylenoxid pro Hydroxylgruppe oxyethylierten Pentaerythrits, Tris(2-hydroxyethyl)isocyanurattri(meth)acrylat, Trivinyltrimellitat, Tri(meth)allylamin, Di(meth)allylalkylamine, beispielsweise Di(meth)allylmethylamin, Tri-(meth)allylphosphat, Tetra(meth)allylethylendiamin, Poly(meth)allylester, Tetra(meth)allyloxiethan oder Tetra(meth)allylammoniumhalide.

Als Verbindung der Vernetzerklasse II sind Verbindungen bevorzugt, die mindestens zwei funktionelle Gruppen aufweisen, die in einer Kondensationsreaktion (=Kondensationsvemetzer), in einer Additionsreaktion oder in einer Ringöffnungsreaktion mit den funktionellen Gruppen der Monomere (α1) oder (α2), bevorzugt mit Säuregruppen, der Monomeren (α1), reagieren können. Bei diesen funktionellen Gruppen der Verbindungen der Vernetzerklasse II handelt es sich vorzugsweise um Alkohol-, Amin-, Aldehyd-, Glycidyl-, Isocyanat-, Carbonat- oder Epichlorfunktionen.

Als Verbindung der Vernetzerklasse II seien als Beispiele genannt Polyole, beispielsweise Ethylenglykol, Polethylenglykole wie Diethylenglykol, Triethylenglykol und Tetraethylenglykol, Propylenglykol, Polypropylenglykole wie Dipropylenglykol, Tripropylenglykol oder Tetrapropylenglykol, 1,3-Butandiol, 1,4-Butandiol, 1,5-Pentandiol, 2,4-Pentandiol, 1,6-Hexandiol, 2,5-Hexandiol, Glycerin, Polyglycerin, Trimethylolpropan, Polyoxypropylen, Oxyethylen-Oxypropylen-Blockcopolymere, Sorbitanfettsäureester, Polyoxyethylensorbitanfettsäureester, Pentaerythrit, Polyvinylalkohol und Sorbitol, Aminoalkohole, beispielsweise Ethanolamin, Diethanolamin, Triethanolamin oder Propanolamin, Polyaminverbindungen, beispielsweise Ethylendiamin, Diethylentriaamin, Triethylentetraamin, Tetraethylenpentaamin oder Pentaethylenhexaamin, Polyglycidylether-Verbindungen wie Ethylenglykoldiglycidylether, Polyethylenglykoldiglycidylether, Glycerindiglycidylether, Glycerinpolyglycidylether, Pentareritritpolyglycidylether, Propylenglykoldiglycidylether Polypropylenglykoldiglycidylether, Neopentylglykoldiglycidylether, Hexandiolglycidylether, Trimethylolpropanpolyglycidylether, Sorbitolpolyglycidylether, Phtahlsäurediglycidylester, Adipinsäurediglycidylether, 1,4-Phenylen-bis(2-oxazolin), Glycidol, Polyisocyanate, vorzugsweise Diisocyanate wie 2,4-Toluoldiisocyanat und Hexamethylendiisocyanat, Polyaziridin-Verbindungen wie 2,2-Bishydroxymethylbutanol-tris[3-(1-aziridinyl)propionat], 1,6-Hexamethylendiethylenharnstoff und Diphenylmethan-bis-4,4'-N,N'-diethylenharnstoff, Halogenepoxide beispielsweise Epichlor- und Epibromhydrin und α-Methylepichlorhydrin, Alkylencarbonate wie 1,3-Dioxolan-2-on (Ethylencarbonat), 4-Methyl-1,3-dioxolan-2-on (Propylencarbonat), 4,5-Dimethyl-1,3-dioxolan-2-on, 4,4-Dimethyl-1,3-dioxolan-2-on, 4-Ethyl-1,3-dioxolan-2-on, 4-Hydroxymethyl-1,3-dioxolan-2-on, 1,3-Dioxan-2-on, 4-Methyl-1,3-dioxan-2-on, 4,6-Dimethyl-1,3-dioxan-2-on, 1,3-Dioxolan-2-on, Poly-1,3-dioxolan-2-on, polyquartäre Amine wie Kondensationsprodukte von Dimethylaminen und Epichlorhydrin. Als Verbindungen der Vernetzerklasse II sind des Weiteren Polyoxazoline wie 1,2-Ethylenbisoxazolin, Vernetzer mit Silangruppen wie γ-Glycidoxypropyltrimethoxysilan und γ-Aminopropyltrimethoxysilan, Oxazolidinone wie 2-Oxazolidinon, Bis- und Poly-2-oxazolidinone und Diglykolsilikate bevorzugt.

Als Verbindungen der Klasse III sind hydroxyl- oder aminogruppenhaltige Ester der (Meth)acrylsäure, wie beispielsweise 2-Hydroxyethyl(meth)acrylat und 2-Hydroxypropyl(meth)acrylat sowie hydroxyl- oder aminogruppenhaltige (Meth)acrylamide oder Mono(meth)allylverbindungen von Diolen bevorzugt.

Die polyvalenten Metallkationen der Vernetzerklasse IV leiten sich vorzugsweise von ein- oder mehrwertigen Kationen ab, die einwertigen insbesondere von Alkalimetallen, wie Kalium, Natrium, Lithium, wobei Lithium bevorzugt wird. Bevorzugte zweiwertige Kationen leiten sich von Zink, Beryllium, Erdalkalimetallen, wie Magnesium, Calcium, Strontium ab, wobei Magnesium bevorzugt wird. Weiter erfindungsgemäß einsetzbare höherwertige Kationen sind Kationen von Aluminium, Eisen, Chrom, Mangan, Titan, Zirkonium und andere Übergangsmetalle sowie Doppelsalze solcher Kationen oder Mischungen der genannten Salze. Bevorzugt werden Aluminiumsalze und Alaune und deren unterschiedliche Hydrate wie z. B. AlCl₃ × 6H₂O, NaAl(SO₄)₂ × 12 H₂O KAl(SO₄)₂ × 12 H₂O oder Al₂(SO₄)₃×14-18 H₂O eingesetzt.
Besonders bevorzugt werden Al₂(SO₄)₃ und seine Hydrate als Vernetzer der Vernetzungsklasse IV verwendet.

Die im erfindungsgemäßen Verfahren eingesetzten Superabsorberfeinteilchen sind vorzugsweise durch Vernetzer der folgenden Vemetzerklassen bzw. durch Vernetzer der folgenden Kombinationen von Vemetzerklassen vemetzt: I, II, III, IV, I II, I III, I IV, I II III, I II IV, I III IV, II III IV, II IV oder III IV. Die vorstehenden Kombinationen von Vemetzerklassen stellen jeweils eine bevorzugte Ausführungsform von Vernetzern eines im erfindungsgemäßen Verfahren eingesetzten Superabsorberfeinteilchen dar.

Weitere bevorzugte Ausführungsformen der im erfindungsgemäßen Verfahren eingesetzten Superabsorberfeinteilchen sind Polymere, die durch einen beliebigen der vorstehend genannten Vernetzer der Vemetzerklassen I vernetzt sind. Unter diesen sind wasserlösliche Vernetzer bevorzugt. In diesem Zusammenhang sind N,N'-Methylenbisacrylamid, Polyethylenglykoldi(meth)acrylate, Triallylmethylammoniumchlorid, Tetraallylammoniumchlorid sowie mit 9 Mol Ethylenoxid pro Mol Acrylsäure hergestelltes Allylnonaethylenglykolacrylat besonders bevorzugt.

Als wasserlösliche Polymere (α4) können in den Superabsorberfeinteilchen wasserlösliche Polymerisate, wie teil- oder vollverseifter Polyvinylalkohol, Polyvinylpyrrolidon, Stärke oder Stärkederivate, Polyglykole oder Polyacrylsäure enthalten, vorzugsweise einpolymerisiert sein. Das Molekulargewicht dieser Polymere ist unkritisch, solange sie wasserlöslich sind. Bevorzugte wasserlösliche Polymere sind Stärke oder Stärkederivate oder Polyvinylalkohol. Die wasserlöslichen Polymere, vorzugsweise synthetische wie Polyvinylalkohol, können auch als Pfropfgrundlage für die zu polymerisierenden Monomeren dienen.

Als Hilfsstoffe (α5) sind in den Polymerfeinteilchen vorzugsweise Stellmittel, organische oder anorganische Partikel wie beispielsweise Geruchsbinder, insbesondere Zeolithe oder Cyclodextrine, Hautpflegesubstanzen, oberflächenaktive Mittel oder Antioxidatien enthalten.

Die im erfindungsgemäßen Verfahren eingesetzten Superabsorberfeinteilchen sind vorzugsweise dadurch erhältlich, dass zunächst aus den vorgenannten Monomeren und Vernetzern ein wasserabsorbierendes Polymer (P) in partikulärer Form hergestellt wird. Die Herstellung dieses als Ausgangsmaterial für die Superabsorberfeinteilchen dienenden Polymers (P) erfolgt beispielsweise durch Massepolymerisation, die vorzugsweise in Knetreaktoren wie Extrudern oder durch Bandpolymerisation erfolgt, Lösungspolymerisation, Spraypolymerisation, inverse Emulsionspolymerisation oder inverse Suspensionspolymerisation. Bevorzugt wird die Lösungspolymerisation in Wasser als Lösemittel durchgeführt. Die Lösungspolymerisation kann kontinuierlich oder diskontinuierlich erfolgen. Aus dem Stand der Technik ist ein breites Spektrum von Variationsmöglichkeiten hinsichtlich Reaktionsverhältnisse wie Temperaturen, Art und Menge der Initiatoren als auch der Reaktionslösung zu entnehmen. Typische Verfahren sind in den folgenden Patentschriften beschrieben: US 4,286,082, DE 27 06 135, US 4,076,663, DE 35 03 458, DE 40 20 780, DE 42 44 548, DE 43 23 001, DE 43 33 056, DE 44 18 818. Die Offenbarungen werden hiermit als Referenz eingeführt und gelten somit als Teil der Offenbarung.

Als Initiatoren zur Initiierung der Polymerisation können alle unter den Polymerisationsbedingungen Radikale bildende Initiatoren verwendet werden, die üblicherweise bei der Herstellung von Superabsorbern eingesetzt werden. Hierzu gehören thermische Katalysatoren, Redoxkatalysatoren und Photoinitiatoren, deren Aktivierung durch energiereiche Strahlung erfolgt. Die Polymerisationsinitiatoren können dabei in einer Lösung erfindungsgemäßer Monomere gelöst oder dispergiert enthalten sein. Bevorzugt ist der Einsatz wasserlöslicher Katalysatoren.

Als thermische Initiatoren kommen sämtliche dem Fachmann bekannte, unter Temperatureinwirkung in Radikale zerfallende Verbindungen in Betracht. Besonders bevorzugt sind dabei thermische Polymerisationsinitiatoren mit einer Halbwertszeit von weniger als 10 Sekunden, darüber hinaus bevorzugt von weniger als 5 Sekunden bei weniger als 180 °C, darüber hinaus bevorzugt bei weniger als 140°C. Dabei sind Peroxide, Hydroperoxide, Wasserstoffperoxid, Persulfate sowie Azoverbindungen besonders bevorzugte thermische Polymerisationsinitiatoren. In manchen Fällen ist es vorteilhaft, Mischungen verschiedener thermischer Polymerisationsinitiatoren zu verwenden. Unter diesen Mischungen sind die aus Wasserstoffperoxid und Natrium- oder Kaliumperoxodisulfat bevorzugt, die in jedem denkbaren Mengenverhältnis eingesetzt werden können. Geeignete organische Peroxide sind vorzugsweise Acetylacetonperoxid, Methylethylketonperoxid, Benzoylperoxid, Lauroylperoxid, Acetylperoxid, Capyrlperoxid, Isopropylperoxydicarbonat, 2-Ethylhexylperoxydicarbonat, t-Butylhydroperoxid, Cumolhydroperoxid, t-Amylperpivalat, t-Butylperpivalat, t-Butylperneohexonat, t-Butylisobutyrat, t-Butylper-2-ethylhexenoat, t-Butylperisononanoat, t-Butylpermaleat, t-Butylperbenzoat, t-Butyl-3,5,5-tri-methylhexanoat und Amylperneodekanoat. Weiterhin sind als thermische Polymerisationsinitiatoren bevorzugt: AzoVerbindungen, wie Azobisisobutyronitrol, Azobisdimethylvaleronitril, 2,2'-Azobis-(2-amidinopropan)dihydrochlorid, Azo-bis-amidinopropan-dihydrochlord, 2,2'-Azobis-(N,N-dimethylen)isobutyramidin-dihydrochlorid, 2- (Carbamoylazo)-isobutyronitril und 4,4'-Azobis-(4-cyanovaleriansäure). Die genannten Verbindungen werden in üblichen Mengen eingesetzt, vorzugsweise in einem Bereich von 0,01 bis 5, bevorzugt von 0,1 bis 2 Mol-%, jeweils bezogen auf die Menge der zu polymerisierenden Monomere.

Die Redoxkatalysatoren enthalten als oxidische Komponente mindestens eine der oben angegebenen Perverbindungen und als reduzierende Komponente vorzugsweise Ascorbinsäue, Glukose, Sorbose, Manose, Ammonium- oder Alkalimetallhydrogensulfit, -sulfat, -thiosulfat, -hyposulfit oder -sulfid, Metallsalze, wie Eisen-II-ionen oder Silberionen oder Natriumhydroxymethylsulfoxylat. Vorzugsweise wird als reduzierende Komponente des Redoxkatalysators Ascorbinsäure oder Natriumpyrosulfit verwendet. Bezogen auf die bei der Polymerisation eingesetzte Menge an Monomeren wird 1×10⁻⁵ bis 1 Mol-% der reduzierenden Komponente des Redoxkatalysators und 1×10⁻⁵ bis 5 Mol-% der oxidierenden Komponente des Redoxkatalysators eingesetzt. Anstelle der oxidierenden Komponente des Redoxkatalysators, oder in Ergänzung zu diesem, können ein oder mehrere, vorzugsweise wasserlösliche, Azoverbindungen verwendet werden.

Wenn man die Polymerisation durch Einwirkung energiereicher Strahlung auslöst, verwendet man üblicherweise als Initiator sogenannte Photoinitiatoren. Hierbei kann es sich beispielsweise üm sogenannte α -Spalter, H-abstrahierende Systeme oder auch um Azide handeln. Beispiele für solche Initiatoren sind Benzophenon-Derivate wie Michlers-Keton, Phenanthren-Derivate, Fluoren-Derivate, Anthrachinon-Derivate, Thioxanton-Derivate, Cumarin-Derivate, Benzoinether und deren Derivate, Azoverbindungen wie die oben genannten Radikalbildner, substituierte Hexaarylbisimidazole oder Acylphosphinoxide. Beispiele für Azide sind: 2-(N,N-Dimethylamino)-ethyl-4-azidocinnamat, 2-(N,N-Dimethylamino)-ethyl-4-azidonaphthylketon, 2-(N,N-Dimethylamino)-ethyl-4-azidobenzoat, 5-Azido-1-naphthyl-2'-(N,N-dimethylamino)ethylsulfon, N-(4-Sulfonylazidophenyl)maleinimid, N-Acetyl-4-sulfonylazidoanilin, 4-Sulfonylazidoanilin, 4-Azidoanilin, 4-Azidophenacylbromid, p-Azidobenzoesäure, 2,6-Bis(p-azidobenzyliden)cyclohexanon und 2,6-Bis-(p-azidobenzyliden)-4-methylcyclohexanon. Die Photoinitiatoren werden, falls sie eingesetzt werden, üblicherweise in Mengen von 0,01 bis 5 Gew.-%, bezogen auf die zu polymerisierenden Monomeren angewendet.
Bevorzugt wird erfindungsgemäß ein Redoxsystem bestehend aus Wassersoffperoxid, Natriumperoxodisulfat und Ascorbinsäure eingesetzt. In der Regel wird die Polymerisation mit den Initiatoren in einem Temperaturbereich von 30 bis 90°C initiiert.

Die Polymerisationsreaktion kann durch einen Initiator oder durch mehrere, zusammenwirkende Initiatoren ausgelöst werden. Weiterhin kann die Polymerisation derart durchgeführt werden, dass man zunächst ein oder mehrere Redoxinitiatoren zusetzt. Im weiteren Polymerisationsverlauf werden dann zusätzlich thermische Initiatoren oder Photoinitiatoren appliziert, wobei im Falle von Photoninitiatoren die Polymerisationsreaktion dann durch die Einwirkung energiereicher Strahlung initiiert wird. Auch die umgekehrte Reihenfolge, also die anfängliche Initiierung der Reaktion mittels energiereicher Strahlung und Photoinitiatoren oder thermischen Initiatoren und eine im weiteren Polymerisationsverlauf erfolgende Initiierung der Polymerisation mittels eines oder mehrere Redoxinitiatoren ist denkbar.

Um die so erhaltenen Polymere (P) in eine partikuläre Form zu überführen, können diese nach ihrer Abtrennung aus der Reaktionsmischung zunächst bei einer Temperatur in einem Bereich von 20 bis 300°C, bevorzugt in einem Bereich von 50 bis 250°C und besonders bevorzugt in einem Bereich von 100 bis 200°C bis hin zu einem Wassergehalt von weniger als 40 Gew.-%, bevorzugt von weniger als 20 Gew.-% und darüber hinaus bevorzugt von weniger als 10 Gew.-%, jeweils bezogen auf das Gesamtgewicht des Polymers (P), getrocknet werden. Die Trocknung erfolgt vorzugsweise in dem Fachmann bekannten Öfen oder Trocknern, beispielsweise in Bandtrocknern, Hordentrocknern, Drehrohröfen, Wirbelbetttrocknern, Tellertrocknern, Paddeltrocknern oder Infrarottrocknern. Sollten die so erhaltenen, getrockneten Polymere (P) noch nicht in partikulärer Form vorliegen, so müssen sie nach der Trocknung noch zerkleinert werden. Das Zerkleinern erfolgt dabei vorzugsweise durch Trockenmahlen, vorzugsweise durch Trockenmahlen in einer Hammermühle, einer Stiftmühle, einer Kugelmühle oder einer Walzenmühle.

Neben dem vorstehend beschriebenen Verfahren zur Überführung des Polymers (P) in eine partikuläre Form können die Polymere auch im gelförmigen Zustand durch das Verfahren des Nassmahlens mit einer beliebigen, konventionellen Vorrichtung zum Nassmahlen zerkleinert werden.

Die durch die vorstehend beschriebenen Verfahren erhältlichen, partikulären Polymere (P) weisen vorzugsweise mindestens eine, vorzugsweise jede, der nachfolgenden Eigenschaften auf:
(a1) die maximale Aufnahme von 0.9 Gew-%er wässriger NaCl-Lösung gemäß ERT 440.1-99 liegt in einem Bereich von 10 bis 1000, bevorzugt von 15 bis 500 und besonders bevorzugt von 20 von 300 ml/g,
(b1) der mit 0.9 Gew-%er wässriger NaCl-Lösung extrahierbare Anteil gemäß ERT 470.1-99 beträgt weniger als 30, bevorzugt weniger als 20 und besonders bevorzugt weniger als 10 Gew.%, bezogen auf das Polymer (P),
(c1) die Schwellzeit zum Erreichen von 80 % der maximalen Absorption von 0,9 Gew.-%er wässriger NaCl-Lösung gemäß ERT 440.1-99 liegt im Bereich von 0,01 bis 180, bevorzugt von 0,01 bis 150 und besonders bevorzugt von 0,01 bis 100 min.,
(d1) die Schüttdichte gemäss ERT 460.1-99 liegt im Bereich von 300 bis 1000, bevorzugt 310 bis 800 und besonders bevorzugt 320 bis 700 g/l,
(e1) der pH-Wert gemäss ERT 400.1-99 von 1 g des Polymers (P) in 11 Wasser liegt im Bereich von 4 bis 10, bevorzugt von 5 bis 9 und besonders bevorzugt von 5,5 bis 7,5,
(f1) die *Centrifuge Retention Capacity* (CRC) gemäß ERT 441.1-99 liegt im Bereich von 10 bis 100, bevorzugt 15 bis 80 und besonders bevorzugt 20 bis 60 g/g,
(g1) die *Absorption Against Pressure* (AAP) bei einem Druck von 21 g/cm² gemäß ERT 442.1-99 liegt im Bereich von 10 bis 60, bevorzugt 15 bis 50 und besonders bevorzugt 20 bis 40 g/g.

Bevorzugte Polymere (P), die als Ausgangsmaterial für die in dem erfindungsgemäßen Verfahren eingesetzten Superabsorberfeinteilchen dienen, sind durch folgende Eigenschaften bzw. Eigenschaftskombinationen gekennzeichnet: a1, b1, c1, d1, e1, f1, g1, a1b1, a1c1, a1d1, a1e1, a1f1, a1g1, a1b1c1, a1b1d1, a1b1e1, a1b1f1, a1b1g1, a1c1d1, a1c1e1, a1c1f1, a1c1g1, a1d1e1, a1d1f1, a1d1g1, a1e1f1, a1e1g1, a1f1g1, a1b1c1d1e1f1g1.

Die in den erfindungsgemäßen Verfahren eingesetzten Superabsorberfeinteilchen sind vorzugsweise dadurch erhältlich, dass die durch die vorstehend beschriebenen Verfahren erhältlichen, getrockneten und gegebenenfalls zerkleinerten, auf dem Polymer (P) basierenden Partikel ausgesiebt werden. Dazu werden diese Partikel auf ein Sieb mit einer Maschenweite von 150 µm gegeben. Auf diese Art und Weise können diejenigen Partikel, die eine Partikelgröße von weniger als 150 µm aufweisen, von den übrigen Partikeln abgetrennt werden. Die auf dieses Art und Weise abgetrennten Polymerpartikel mit einer Partikelgröße von weniger als 150 µm werden in dem erfindungsgemäßen Verfahren als Superabsorberfeinteilchen eingesetzt. Grundsätzlich können jedoch alle Superabsorberfeinteilchen mit einer Partikelgröße von weniger als 150 µm im erfindungsgemäßen Verfahren eingesetzt werden, die bei der Herstellung von Superabsorberpartikel als Feinteilchen anfallen, unabhängig davon, wie die Superabsorberfeinteilchen von den übrigen Superabsorberpartikeln abgetrennt worden sind.

In einer bevorzugten Ausführungsform der erfindungsgemäßen Verfahren werden als Superabsorberfeinteilchen Partikel eingesetzt, die einen Innenbereich und einen den Innenbereich begrenzenden Oberflächenbereich aufweisen und wobei der Oberflächenbereich eine andere chemische Zusammensetzung als der Innenbereich aufweist oder sich in einer physikalischen Eigenschaft vom Innenbereich unterscheidet. Physikalische Eigenschaften, in denen sich der Innenbereich vom Oberflächenbereich unterscheidet, sind beispielsweise die Ladungsdichte oder der Vernetzungsgrad.

Diese einen Innenbereich und einen den Innenbereich begrenzenden Oberflächenbereich aufweisenden Superabsorberfeinteilchen sind vorzugsweise dadurch erhältlich, dass oberflächennahe, reaktive Gruppen der Superabsorberfeinteilchen vor oder nach ihrer Abtrennung von den übrigen Partikeln des partikulären Polymers (P) nachvernetzt werden. Diese Nachvemetzung kann thermisch, photochemisch oder chemisch erfolgen.

Als Nachvernetzer bevorzugt sind die im Zusammenhang mit den Vernetzern (α3) genannten Verbindungen der Vernetzerklasse II und IV.

Unter diesen Verbindungen sind als Nachvernetzer besonders bevorzugt Diethylenglykol, Triethylenglykol, Polyethylenglykol, Glyzerin, Polyglyzerin, Propylenglykol, Diethanolamin, Triethanolamin, Polyoxypropylen, Oxyethylen-Oxypropylen-Blockcopolymere, Sorbitanfettsäureester, Polyoxyethylensorbitanfettsäureester, Trimethylolpropan, Pentaerytrit, Polyvinylalkohol, Sorbitol, 1,3-Dioxolan-2-on (Ethylencarbonat), 4-Methyl-1,3-dioxolan-2-on (Propylencarbonat), 4,5-Dimethyl-1,3-dioxolan-2-on, 4,4-Dimethyl-1,3-dioxolan-2-on, 4-Ethyl-1,3-dioxolan-2-on, 4-Hydroxymethyl-1,3-dioxolan-2-on, 1,3-Dioxan-2-on, 4-Methyl-1,3-dioxan-2-on, 4,6-Dimethyl-1,3-dioxan-2-on, 1,3-Dioxolan-2-on, Poly-1,3-dioxolan-2-on.
Besonders bevorzugt wird Ethylencarbonat als Nachvernetzer eingesetzt.

Bevorzugte Ausführungsformen der Superabsorberfeinteilchen sind diejenigen, die durch Vernetzer der folgenden Vernetzerklassen bzw. durch Vernetzer der folgenden Kombinationen von Vemetzerklassen nachvemetzt sind: II, IV und II IV.

Vorzugsweise wird der Nachvernetzer in einer Menge in einem Bereich von 0,01 bis 30 Gew.-%, besonders bevorzugt in einer Menge in einem Bereich von 0,1 bis 20 Gew.-% und darüber hinaus bevorzugt in einer Menge in einem Bereich von 0,3 bis 5 Gew.-%, jeweils bezogen auf das Gewicht der superabsorbierenden Polymere bei der Nachvemetzung eingesetzt.

Es ist ebenfalls bevorzugt, dass die Nachvemetzung dadurch erfolgt, dass ein Fluid F₁ umfassend ein Lösemittel, vorzugsweise Wasser, mit Wasser mischbare organische Lösemittel wie etwa Methanol oder Ethanol oder Mischungen aus mindestens zwei davon, sowie den Nachvernetzer mit dem Aussenbereich der Polymerteilchen bei einer Temperatur in einem Bereich von 30 bis 300°C, besonders bevorzugt in einem Bereich von 100 bis 200°C in Kontakt gebracht werden. Das in Kontakt bringen erfolgt dabei vorzugsweise durch Aufsprühen des Fluids F₁ auf die Polymerteilchen und anschließendes Mischen der mit dem Fluid F₁ in Kontakt gebrachten Polymerteilchen. Dabei ist der Nachvernetzer in dem Fluid F₁ vorzugsweise in einer Menge in einem Bereich von 0,01 bis 20 Gew.-%, besonders bevorzugt in einer Menge in einem Bereich von 0,1 bis 10 Gew.-%, bezogen auf das Gesamtgewicht des Fluids F₁, enthalten. Es ist weiterhin bevorzugt, dass das Fluid F₁ in einer Menge in einem Bereich von 0,01 bis 50 Gew.-%, besonders bevorzugt in einer Menge in einem Bereich von 0,1 bis 30 Gew.-%, jeweils bezogen auf das Gewicht der Polymerteilchen, mit den Polymerteilchen in Kontakt gebracht wird.

Das in den erfindungsgemäßen Verfahren im Verfahrensschritt (A) eingesetzte Fluid umfasst vorzugsweise ein Lösemittel sowie das vernetzbare, nicht vernetzte Polymer. Als Lösemittel werden vorzugsweise Wasser oder polare, mit Wasser mischbare Lösemittel wie Aceton, Methanol, Ethanol, 2-Propanol oder Mischungen aus mindestens zwei davon eingesetzt. Dabei kann das nicht vernetzte Polymer in dem Lösemittel gelöst oder dispergiert sein.

In einer bevorzugten Ausführungsform des erfindungsgemäßen Verfahrens beinhaltet das Fluid von 18 bis 70 Gew.-% und besonders bevorzugt von 19 bis 55 Gew.-%, jeweils bezogen auf das Fluid, des vernetzbaren, nicht vernetzten Polymers.

Das vernetzbare, nicht vernetzte Polymer basiert vorzugsweise auf
(β1) 20 bis 100 Gew.-%, bevorzugt 50 bis 98,99 Gew.-% und besonders bevorzugt 90 bis 98,95 Gew.-% polymerisierten, ethylenisch ungesättigten, säuregruppenhaltigen Monomeren oder deren Salzen,
(β2) 0 bis 70 Gew.-%, bevorzugt 1 bis 60 Gew.-% und besonders bevorzugt 1 bis 40 Gew.-% polymerisierten, ethylenisch ungesättigten, mit (α1) copolymerisierbaren Monomeren, sowie
(β3) 0 bis 10 Gew.-%, bevorzugt 0,01 bis 7 Gew.-% und besonders bevorzugt 0,05 bis 5 Gew.-% des Monomers, das mit polymerisierten säuregruppentragenden Monomeren, vorzugsweise mit polymerisierten säuregruppenhaltigen Monomeren im Oberflächenbereich der Superabsorberfeinteilchen oder mit anderen polymerisierten säuregruppenhaltigen Monomeren (M) im vernetzbaren, nichtvernetzten Polymer in einer Kondensationsreaktion, in einer Additionsreaktion oder in einer Ringöffnungsreaktion, vorzugsweise bei einem Energieeintrag, reagieren kann,
wobei die Summe der Komponenten (β1) bis (β3) 100 Gew.-% beträgt.

Als Kondensationsreaktionen kommen vorzugsweise die Bildung von Ester-, Amid-, Imid- oder Urethanbindungen in Betracht, wobei die Bildung von Esterbindung bevorzugt ist. Diese Esterbindungen werden vorzugsweise durch die Reaktion einer OH-Gruppe des vernetzbaren, nicht vernetzten Polymers mit einer Säuregruppe des Superabsorberfeinteilchens oder mit einer Säuregruppe des vernetzbaren, nichtvernetzten Polymers gebildet.

Die säuregruppenhaltigen Monomere (β1) sind vorzugsweise zu mindestens 10 Mol-%, besonders bevorzugt zu mindestens 20 Mol-%, darüber hinaus bevorzugt zu mindestens 40 Mol-% und weiterhin bevorzugt im Bereich von 45 bis 55 Mol-% neutralisiert. Die Neutralisation der Monomere kann vor, während oder erst nach der Herstellung des vernetzbaren, nichtvernetzten Polymers erfolgen. Die Neutralisierung erfolgt dabei vorzugsweise mit denjenigen Basen, die bereits im Zusammenhang mit der Neutralisation der säuregruppentragenden Monomere (α1) genannt wurden. Neben den dort genannten Basen werden zur Neutralisation der nicht vernetzten Polymere vorzugsweise auch Basen eingesetzt, die Ammonium, Calcium oder Magnesium als Kationen enthalten. In diesem Zusammenhang bevorzugte Basen sind Ammoniumcarbonat, Ammoniak, Calciumcarbonat, Calciumhydroxid, Magnesiumhydroxid und Magnesiumcarbonat.

Als Monomere (β1) und (β2) werden vorzugsweise diejenigen Monomere eingesetzt, die auch als bevorzugte Monomere (α1) bzw. (α2) eingesetzt werden:
Grundsätzlich kommen als Monomere (M) bzw (β3) alle dem Fachmann geeigneten Monomere, insbesondere die der Vernetzerklasse III, in betracht. Bevorzugte Monomere (β3) sind die Umsetzungsprodukte von gesättigten aliphatischen, cycloalphatischen, aromatischen Alkohlen, Aminen oder Thiolen mit ethylenisch ungesättigten Carbonsäuren, reaktiven Carbonsäurederivaten oder Allylhalogeniden. Als Beispiele seien in diesem Zusammenhang genannt: (Meth)allylalkohol, (Meth)allylamin, hydroxyl- oder aminogruppenhaltige Ester der (Meth)acrylsäure, wie Hydroxyalkylacrylate, insbesondere Hydroxymethyl(meth)acrylat, 2-Hydroxyethyl(meth)acrylat oder 2-Hydroxypropyl(meth)acrylat, Aminomalkyl(meth)acrylate, insbesondere Aminomethyl(meth)acrylat, 2-Aminoethyl-(meth)acrylat oder 2-Aminopropyl(meth)acrylat, Mono(meth)allylverbindungen von Polyolen, vorzugsweise von Diolen wie beispielsweise Polyethylenglykole oder Polypropylenglykole, sowie Glycidylalkyl(meth)acrylate wie Glycidyl(meth)acrylat.

Besonders bevorzugte vernetzbare, nicht vernetzte Polymere, die in den erfindungsgemäßen Verfahren eingesetzt werden, sind diejenigen Polymere, die auf 1 bis 80 Gew.-%, besonders bevorzugt auf 1 bis 60 Gew.-% und darüber hinaus bevorzugt auf 1 bis 20 Gew.-% (Meth)acrylamid und 20 bis 99 Gew.-%, besonders bevorzugt auf 40 bis 99 Gew.-% und darüber hinaus bevorzugt auf 80 bis 99 Gew.-%, jeweils bezogen auf das Gesamtgewicht des nicht vernetzten Polymers, auf (Meth)acrylsäure basieren, wobei die (Meth)acrylsäure vorzugsweise zu mindestens 10 Mol-%, besonders bevorzugt zu mindestens 20 Mol-% und darüber hinaus bevorzugt zu mindestens 50 Mol-% neutralisiert ist.

Es ist weiterhin bevorzugt, dass das in dem erfindungsgemäßen Verfahren eingesetzte Fluid neben dem Lösemittel und dem vernetzbaren, nicht vernetzten Polymer einen weiteren, externen Vernetzer umfasst. Dies gilt insbesondere dann, wenn die vernetzbaren, nicht vernetzten Polymere keine Monomere (M) bzw. (β3) beinhalten. Als weiterer externe Vernetzer sind dabei diejenigen der Vemetzerklassen II und IV bevorzugt, die bereits im Zusammenhang mit den Vernetzern (α3) genannt wurden. Besonders bevorzugte weitere Vernetzer sind diejenigen, die als besonders bevorzugte Vernetzer der Klassen II und IV im Zusammenhang mit den Monomeren (α3) genannt wurden. Es ist in diesem Zusammenhang weiterhin bevorzugt, dass das Fluid den weiteren externen Vernetzer in einer Menge in einem Bereich von 0,01 bis 30 Gew.-%, bevorzugt in einem Bereich von 0,1 bis 15 Gew.-% und besonders bevorzugt in einem Bereich von 0,2 bis 7 Gew.-%, bezogen auf das Gewicht des nicht vernetzten Polymers, enthält.

Es ist in dem erfindungsgemäßen Verfahren weiterhin bevorzugt, dass das vernetzbare, nicht vernetzte Polymer ein durch Gelpermeabilitätschromatographie bestimmtes Gewichtsmittel des Molekulargewicht von mehr als 8.000 g/mol, bevorzugt ein Gewichtsmittel des Molekulargewichtes in einem Bereich von 10.000 bis 1.000.000 g/mol, besonders bevorzugt in einen Bereich von 50.000 bis 750.000 g/mol und darüber hinaus bevorzugt in einem Bereich von 90.000 bis 700.000 g/mol, aufweist.

Es ist außerdem bevorzugt, dass das in den erfindungsgemäßen Verfahren im Verfahrensschritt (A) eingesetzte Fluid eine gemäß ASTM 1824/90 bei 20°C bestimmte Viskosität in einem Bereich von 50 bis 50000 mPa·s, besonders bevorzugt in einem Bereich von 100 bis 20000 mPa·s und darüber hinaus bevorzugt in einem Bereich von 200 bis 10000 mPa·s aufweist.

Die Herstellung des in den erfindungsgemäßen Verfahren eingesetzten vernetzbaren, nicht vernetzten Polymers erfolgt vorzugsweise durch diejenigen Verfahren, die bereits im Zusammenhang mit der Herstellung der als Ausgangsmaterial für die Superabsorberfeinteilchen dienenden Polymere (P) genannt wurden. Die durch diese Verfahren erhältlichen Fluide enthaltend das vernetzbare, nicht vernetzte Polymer werden, bevor sie im erfindungsgemäßen Verfahren eingesetzt werden, gegebenenfalls durch die Zugabe von Lösemittel verdünnt, wobei die Menge an vemetzbarem, nicht vernetzten Polymer im Fluid einen Wert von 80 Gew.-%, bevorzugt von 60 Gew.-% und besonders bevorzugt von 40 Gew.-%, bezogen auf das Gesamtgewicht des Fluids, nicht übersteigen sollte.

In einer weiteren bevorzugten Ausführungsform des erfindungsgemäßen Verfahrens umfasst das Fluid neben dem Lösemittel, dem vernetzbaren, nicht vernetzten Polymer und gegebenenfalls dem weiteren Vernetzer weitere Additive. Diese Additive können auch in das vernetzbare, nicht vernetzte Polymer einpolymerisiert sein.

Bevorzugte Additive sind Substanzen, welche die Brüchigkeit der durch das erfindungsgemäße Verfahren hergestellten Superabsorberpartikel reduzieren, wie etwa Polyethylenglykol, Polypropylenglykol, gemischte Polyalkoxylate, auf Polyolen wie Glycerin, Trimethylolpropan oder Butandiol basierende Polyalkoxylate, Tenside mit einem HLB von mehr als 10 wie Alkylpolyglucoside oder ethoxylierte Zuckerester, beispielsweise Polysorbate unter dem Handeslnamen Tween von ICI. Diese Additive wirken teilweise zugleich auch als weitere Vernetzer, wie zum Beispiel Polyethylenglykol, Polypropylenglykol, Trimethylolpropan oder Butandiol.

Weiterhin als Additive bevorzugt sind Mittel, welche die Härte der durch das erfindungsgemäße Verfahren hergestellten Superabsorberpartikel reduzieren, wie etwa kationische Tenside wie Alkyltrimethylammoniumchlorid, Dialkyldimethylammoniumchlorid, Dimethylstearylammoniumchlorid, Alkylbenzyldimethylammoniumchlorid oder die entsprechenden Methylsulfate, Quaternäre Tallölfettsäure-Imidazoliniummethosulfate. Diese Additive werden vorzugsweise in Mengen in einem Bereich von 0 bis 5 Gew. %, besonders bevorzugt in einem Bereich von 0,5 bis 4 Gew.-%, bezogen auf das Gewicht des nicht vernetzten Polymers, eingesetzt. Die Additive können dabei entweder vor oder nach der Polymerisation zugesetzt werden. Sie binden die Polycarboxylate durch Anionen-Kationen-Wechselwirkung und bewirken somit den Erweichungseffekt. Sie bewirken gleichzeitig eine Verbesserung der Absorptionsfähigkeit für wässrige Flüssigkeiten. Eine anderer Vorteil der Substanzen ist ihre biozide Wirkung, die einen ungewollten Abbau der Quellungsmittel verhindern. Diese Eigenschaft ist für manche Anwendungen besonders wichtig.

Als Additive sind des weiteren Trennmittel bevorzugt, wie etwa anorganische oder organische pulverförmige Trennmittel. Diese Trennmittel werden vorzugsweise in Mengen in einem Bereich von 0 bis 2 Gew.-%, besonders bevorzugt in einem Bereich von 0,1 bis 1,5 Gew.-%, bezogen auf das Gewicht des vernetzten Polymers, eingesetzt. Bevorzugte Trennmittel sind Holzmehl, Pulp Fasern, pulverförmige Rinde, Cellulosepulver, minaralische Füllstoffe wie Perlit, synthetische Füllstoffe wie Nylonpulver, Rayonpulver, Diatomerde, Bentonit, Kaolin, Zeolithe, Talk, Lehm, Asche, Kohlenstaub, Magnesiumsilikate, Dünger oder Mischungen der Substanzen. Hochdisperse pyrogene Kieselsäure wie sie unter dem Handelsnamen Aerosil von Degussa vertrieben wird ist bevorzugt.

In einer bevorzugten Ausführungsform des erfindungsgemäßen Verfahrens erfolgt das in Kontakt bringen der Superabsorberfeinteilchen mit dem Fluid enthaltend das nicht vernetzte Polymer in Gegenwart eines auf einem Polyzucker oder einer Silizium-Sauerstoff beinhaltenden Verbindung oder einer Mischung von mindestens zwei davon basierenden Effektstoffes. Dabei kann der Effektstoff im Fluid enthalten sein oder aber vor dem in Kontakt bringen der Superabsorberfeinteilchen mit dem Fluid mit den Superabsorberfeinteilchen vermischt werden. Es ist auch möglich, dass der Effektstoff in einem weiteren Fluid F' gelöst oder dispergiert wird und in Form dieser Lösung oder Dispersion zusammen mit dem Fluid mit den Superabsorberfeinteilchen in Kontakt gebracht wird. Dabei umfasst das Fluid F' neben dem Effektstoff vorzugsweise eine Flüssigkeit, wobei als Flüssigkeit Wasser sowie organische Lösemittel wie etwa Methanol oder Ethanol, oder aber Mischungen aus mindestens zwei davon, besonders bevorzugt sind, wobei Wasser als Flüssigkeit besonders bevorzugt ist.

Als Polyzucker kommen erfindungsgemäß alle dem Fachmann geläufigen Stärken und deren Derivate sowie Cellulosen und deren Derivate sowie Cyclodextrine in Betracht, wobei als Cyclodextrine vorzugsweise α-Cyclodextrin, β-Cyclodextrin, γ-Cyclodextrin oder Mischungen aus diesen Cyclodextrinen eingesetzt werden.

Als Silizium-Sauerstoff beinhaltende Verbindungen sind Zeolithe bevorzugt. Als Zeolithe können alle dem Fachmann bekannten synthetischen oder natürliche Zeolithe eingesetzt werden. Bevorzugte natürliche Zeolithe sind Zeolithe aus der Natrolith-Gruppe Harmoton-Gruppe, der Mordenit-Gruppe, der Chabasit-Gruppe, der Faujasit-Gruppe (Sodalith-Gruppe) oder der Analcit-Gruppe. Beispiele für natürliche Zeolithe sind Analcim, Leucit, Pollucite, Wairakite, Bellbergite, Bikitaite, Boggsite, Brewsterite, Chabazit, Willhendersonite, Cowlesite, Dachiardite, Edingtonit, Epistilbit, Erionit, Faujasit, Ferrierite, Amicite, Garronite, Gismondine, Gobbinsite, Gmelinit, Gonnardite, Goosecreekit, Harmotom, Phillipsit, Wellsite, Clinoptilolit, Heulandit, Laumontit, Levyne, Mazzite, Merlinoite, Montesommaite, Mordenit, Mesolit, Natrolit, Scolecit, Offretite, Paranatrolite, Paulingite, Perlialite, Barrerite, Stilbit, Stellerit, Thomsonit, Tschernichite oder Yugawaralite. Bevorzugte synthetische Zeolithe sind Zeolith A, Zeolith X, Zeolith Y, Zeolith P oder das Produkt ABSCENTS.

Als Kationen enthalten die in dem erfindungsgemäßen Verfahren eingesetzten Zeolithe vorzugsweise Alkalimetall-Kationen wie Li⁺, Na⁺, K⁺, Rb⁺, Cs⁺ oder Fr⁺ und/oder Erdalkalimetall-Kationen wie Mg²⁺, Ca²⁺, Sr²⁺ oder Ba²⁺.

Als Zeolithe können Zeolithe des sogenannten "mittleren" Typs eingesetzt werden, bei denen das SiO₂/AlO₂-Verhältnis kleiner als 10 ist, besonders bevorzugt liegt das SiO₂/AlO₂-Verhältnis dieser Zeolithe in einem Bereich von 2 bis 10. Neben diesen "mittleren" Zeolithen können weiterhin Zeolithe des "hohen" Typs eingesetzt werden, zu denen beispielsweise die bekannten "Molekularsieb"-Zeolithe des Typs ZSM sowie beta-Zeolith gehören. Diese "hohen" Zeolithe sind vorzugsweise durch ein SiO₂/AlO₂-Verhältnis von mindestens 35, besonders bevorzugt von einem SiO₂/AlO₂-Verhältnis in einem Bereich von 200 bis 500 gekennzeichnet.

Vorzugsweise werden die Zeolithe als Partikel mit einer mittleren Partikelgröße in einem Bereich von 1 bis 500 µm, besonders bevorzugt in einem Bereich von 2 bis 200 µm und darüber hinaus bevorzugt in einem Bereich von 5 bis 100 µm eingesetzt.

Die Effektstoffe werden in den erfindungsgemäßen Verfahren vorzugsweise in einer Menge in einem Bereich von 0,1 bis 50 Gew.-%, besonders bevorzugt in einem Bereich von 1 bis 40 Gew.-% und darüber hinaus bevorzugt in einer Menge in einem Bereich von 5 bis 30 Gew.-%, jeweils bezogen auf das Gewicht der Superabsorberfeinteilchen, eingesetzt.

Neben den in dem erfindungsgemäßen Verfahren eingesetzten Effektstoffen können Deodorantien, Geruchsbinder oder Geruchsabsorber oder mindestens zwei davon eingesetzt werden. Es ist bevorzugt, dass diese bis maximal in der dreifachen Menge des Effektstoffs eingesetzt werden.

Deodorantien (Desodorantien) wirken Körpergerüchen entgegen, überdecken oder beseitigen sie. Körpergerüche entstehen durch die Einwirkung von Hautbakterien auf apokrinen Schweiss, wobei unangenehm riechende Abbauprodukte gebildet werden. Dementsprechend sind Deodorantien Wirkstoffe, wie keimhemmende Mittel, Enzyminhibitoren, Geruchsabsorber oder Geruchsüberdecker sowie Antitranspirantien.

Als keimhemmende Mittel sind grundsätzlich alle gegen grampositive Bakterien wirksamen Stoffe bevorzugt, wie z. B. 4-Hydroxybenzoesäure und ihre Salze und Ester, N-(4-Chlorphenyl)N'-(3,4 dichlorphenyl)harnstoff, 2,4,4'-Trichlor-2'-hydroxydiphenylether (Triclosan), 4-Chlor-3,5-dimethylphenol, 2,2'- Methylen-bis(6-brom-4-chlorphenol), 3-Methyl-4-(1-methylethyl)phenol, 2-Benzyl-4-chlorphenol, 3-(4- Chlorphenoxy)-1,2-propandiol, 3-Iod-2-propinylbutylcarbamat, Chlorhexidin, 3,4,4'-Trichlorcarbonilid (TTC), antibakterielle Riechstoffe, Thymol, Thymianöl, Eugenol, Nelkenöl, Menthol, Minzöl, Famesol, Phenoxyethanol, Glycerinmonocaprinat, Glycerinmonocaprylat, Glycerinmonolaurat (GML), Diglycerinmonocaprinat (DMC), Salicylsäure-N-alkylamide wie z. B. Salicylsäure-n-octylamid oder Salicylsäure-n-decylamid.

Als Enzyminhibitoren sind beispielsweise Esteraseinhibitoren geeignet. Hierbei handelt es sich vorzugsweise um Trialkylcitrate wie Trimethylcitrat, Tripropylcitrat, Triisopropylcitrat, Tributylcitrat und insbesondere Triethylcitrat (Hydagen TM CAT, Cognis GmbH, Düsseldorf/Deutschland). Die Stoffe inhibieren die Enzymaktivität und reduzieren dadurch die Geruchsbildung. Weitere Stoffe, die als Esteraseinhibitoren in Betracht kommen, sind Sterolsulfate oder -phosphate, wie beispielsweise Lanosterin-, Cholesterin-, Campesterin-, Stigmasterin- und Sitosterinsulfat bzw -phosphat, Dicarbonsäuren und deren Ester, wie beispielsweise Glutarsäure, Glutarsäuremonoethylester, Glutarsäurediethylester, Adipinsäure, Adipinsäuremonoethylester, Adipinsäurediethylester, Malonsäure und Malonsäurediethylester, Hydroxycarbnonsäuren und deren Ester wie beispielsweise Citronensäure, Äpfelsäure, Weinsäure oder Weinsäurediethylester, sowie Zinkglycinat. Als Geruchsabsorber eignen sich Stoffe, die geruchsbildende Verbindungen aufnehmen und weitgehend festhalten können. Sie senken den Partialdruck der einzelnen Komponenten und verringern so auch ihre Ausbreitungsgeschwindigkeit. Wichtig ist, dass dabei Parfums unbeeinträchtigt bleiben müssen. Geruchsabsorber haben keine Wirksamkeit gegen Bakterien. Sie enthalten beispielsweise als Hauptbestandteil ein komplexes Zinksalz der Ricinolsäure oder spezielle, weitgehend geruchsneutrale Duftstoffe, die dem Fachmann als "Fixateure" bekannt sind, wie z. B. Extrakte von Labdanum bzw. Styrax oder bestimmte Abietinsäurederivate. Als Geruchsüberdecker fungieren Riechstoffe oder Parfümöle, die zusätzlich zu ihrer Funktion als Geruchsüberdecker den Deodorantien ihre jeweilige Duftnote verleihen. Als Parfümöle seien beispielsweise genannt Gemische aus natürlichen und synthetischen Riechstoffen. Natürliche Riechstoffe sind Extrakte von Blüten, Stengeln und Blättern, Früchten, Fruchtschalen, Wurzeln, Hölzern, Kräutern und Gräsern, Nadeln und Zweigen sowie Harzen und Balsamen. Weiterhin kommen tierische Rohstoffe in Frage, wie beispielsweise Zibet und Castoreum. Typische synthetische Riechstoffverbindungen sind Produkte vom Typ der Ester, Ether, Aldehyde, Ketone, Alkohole und Kohlenwasserstoffe. Riechstoffverbindungen vom Typ der Ester sind z. B. Benzylacetat, p-tert.-Butylcyclohexylacetat, Linalylacetat, Phenylethylacetat, Linalylbenzoat, Benzylformiat, Allylcyclohexylpropionat, Styrallylpropionat und Benzylsalicylat. Zu den Ethem zählen beispielsweise Benzylethylether, zu den Aldehyden z. B. die linearen Alkanale mit 8 bis 18 Kohlenstoffatomen, Citral, Citronellal, Citronellyloxyacetaldehyd, Cyclamenaldehyd, Hydroxycitronellal, Lilial und Bourgeonal, zu den Ketonen z. B. die Jonone und Methylcedrylketon, zu den Alkoholen Anethol, Citronellol, Eugenol, Isoeugenol, Geraniol, Linalool, Phenylethylalkohol und Terpineol, zu den Kohlenwasserstoffen gehören hauptsächlich die Terpene und Balsame. Bevorzugt werden jedoch Mischungen verschiedener Riechstoffe verwendet, die gemeinsam eine ansprechende Duftnote erzeugen. Auch ätherische Öle geringerer Flüchtigkeit, die meist als Aromakomponenten verwendet werden, eignen sich als Parfümöle, z. B. Salbeiöl, Kamillenöl, Nelkenöl, Melissenöl, Minzenöl, Zimtblätteröl, Lindenblütenöl, Wacholderbeerenöl, Vetiveröl, Olibanöl, Galbanumöl, Labdanumöl und Lavandinöl. Vorzugsweise werden Bergamotteöl, Dihydromyrcenol, Lilial, Lyral, Citronellol, Phenylethylalkohol, alpha -Hexylzimtaldehyd, Geraniol, Benzylaceton, Cyclamenaldehyd, Linalool, Boisambrene Forte, Ambroxan, Indol, Hedione, Sandelice, Citronenöl, Mandarinenöl, Orangenöl, Allylamylglycolat, Cyclovertal, Lavandinöl, Muskateller Salbeiöl, beta-Damascone, Geraniumöl Bourbon, Cyclohexylsalicylat, Vertofix Coeur, Iso-E-Super, Fixolide NP, Evernyl, Iraldein gamma, Phenylessigsäure, Geranylacetat, Benzylacetat, Rosenoxid, Romilat, Irotyl und Floramat allein oder in Mischungen, eingesetzt.

Antitranspirantien reduzieren durch Beeinflussung der Aktivität der ekkrinen Schweißdrüsen die Schweißbildung, und wirken somit Achselnässe und Körpergeruch entgegen. Als adstringierende Antitranspirant-Wirkstoffe eignen sich vor allem Salze des Aluminiums, Zirkoniums oder des Zinks. Solche geeigneten antihydrotisch wirksamen Wirkstoffe sind z. B. Aluminiumchlorid, Aluminiumchlorhydrat, Aluminiumdichlorhydrat, Aluminiumsesquichlorhydrat und deren Komplexverbindungen z. B. mit Propylenglycol-1,2. Aluminiumhydroxyallantoinat, Aluminiumchloridtartrat, Aluminium- Zirkonium-Trichlorohydrat, Aluminium-Zirkonium-Tetrachlorohydrat, Aluminium-Zirkonium-Pentachlorohydrat und deren Komplexverbindungen z. B. mit Aminosäuren wie Glycin.

Vorzugsweise wird in den erfindungsgemäßen Verfahren das Fluid in einer Menge in einem Bereich von 0,1 bis 500 Gew.-%, besonders bevorzugt in einem Bereich von 0,5 bis 300 Gew.-% und darüber hinaus bevorzugt in einer Menge in einem Bereich 1 bis 200 Gew.-%, bezogen auf das Gewicht der Superabsorberfeinteilchen, mit den Superabsorberfeinteilchen in Kontakt gebracht.

Das in Kontakt bringen des Fluids mit den Superabsorberfeinteilchen erfolgt vorzugsweise durch Mischen des Fluids mit den Superabsorberfeinteilchen oder durch Besprühen der Superabsorberfeinteilchen mit dem Fluid. Das in Kontakt bringen kann ebenso in einer Wirbelschicht erfolgen.

Zum Mischen bzw. Besprühen sind alle Vorrichtungen geeignet, die eine homogene Verteilung des Fluids auf oder mit den Superabsorberfeinteilchen erlauben. Beispiele sind Lödige Mischer (hergestellt durch die Firma *Gebrüder Lödige Maschinenbau GmbH*), Gerickc Multi-Flux Mischer (hergestellt durch die Firma *Gericke GmbH*), DRAIS-Mischer (hergestellt durch die Firma *DRAIS GmbH* Spezialmaschinenfabrik Mannheim), Hosokawa Mischer (*Hosokawa Mokron Co., Ltd.*), Ruberg Mischer (hergestellt durch die Firma *Gebr. Ruberg GmbH & C0.KG Nieheim*), Hüttlin Coater (hergestellt durch die Firma *BWI Hüttlin GmbH Steinen*), Fließbetttrockner oder Sprühgranulatoren von AMMAG (hergestellt durch die Firma *AMMAG Gunskirchen, Österreich*) oder Heinen (hergestellt durch die Firma *A. Heinen AG Anlagenbau Varel*), Patterson-Kelly-Mischer, NARA-Schaufelmischer, Schneckenmischer, Tellermischer, Wirbelschichttrockner, Schugi-Mischer oder PROCESSALL.

Für das in Kontakt bringen in einer Wirbelschicht können alle dem Fachmann bekannten und geeignet erscheinenden Wirbelschichtverfahren angewandt werden. Beispielsweise kann ein Wirbelschichtcoater eingesetzt werden.

Im zweiten Schritt (B) der erfindungsgemäßen Verfahren erfolgt das Vernetzen des nicht vernetzten Polymers durch Erhitzen der mit dem Fluid in Kontakt gebrachten Superabsorberfeinteilchen, wobei in einer bevorzugten Ausführungsform der erfindungsgemäßen Verfahren das Erhitzen während des in Kontakt bringens der Superabsorberfeinteilchen mit dem Fluid erfolgt.

Das Erhitzen erfolgt dabei vorzugsweise in dem Fachmann bekannten Öfen oder Trocknern. Vorzugsweise werden die mit dem Fluid in Kontakt gebrachten Superabsorberfeinteilchen für 1 bis 120 Minuten, besonders bevorzugt für 2 bis 90 Minuten und darüber hinaus bevorzugt für 3 und 60 Minuten erhitzt Durch das Erhitzen wird das nicht vernetzte Polymer vernetzt, wobei die Vernetzung vorzugsweise durch Kondensationsreaktion, Additionsreaktion oder Ringöffnungsreaktion zwischen den funktionellen Gruppen der Monomere (M) des vernetzbaren, nicht vernetzten Polymers und den funktionellen Gruppen, vorzugsweise den Carboxylatgruppen, im Oberflächenbereich der Superabsorberfeinteilchen bzw. den anderen funktionellen Gruppen, vorzugsweise den Carboxylatgruppen, des vernetzbaren, nicht vernetzten Polymers oder durch Kondensationsreaktion, Additionsreaktion oder Ringöffnungsreaktion zwischen den funktionellen Gruppen, vorzugsweise den Carboxylatgruppen, des nicht vernetzten Polymers und den funktionellen Gruppen, vorzugsweise den Carboxylatgruppen, im Oberflächenbereich der Superabsorberfeinteilchen und dem weiteren Vernetzer erfolgt.

In einer weiteren Ausführungsform der erfindungsgemäßen Verfahren werden die durch das vorstehend beschriebene Verfahren erhaltenen Superabsorberpartikel, vorzugsweise ein Teil der durch das vorstehend beschriebene Verfahren erhältlichen Superabsorberpartikel, besonders bevorzugt diejenigen Superabsorberpartikel, die eine Partikelgröße von mehr als 850 µm aufweisen, noch zerkleinert, wobei das Zerkleinern vorzugsweise durch Mahlen erfolgt.

In einem weiteren Schritt (C), der vorzugsweise unmittelbar auf den Schritt (B) folgt, kann während oder nach Schritt (B) ein Nachvernetzer zugegeben werden. Im Zusammenhang mit der Zugabe dieses Nachvernetzers wird auf die vorstehenden Ausführungen zur Nach- bzw. Oberflächenvernetzung verwiesen.

Die vorliegende Erfindung betrifft weiterhin die durch die vorstehend beschriebenen, erfindungsgemäßen Verfahren erhältlichen Superabsorberpartikel.

Ferner betrifft die Erfindung Superabsorberpartikel beinhaltend zu mehr als 75 Gew.-%, bevorzugt zu mehr als 85 Gew.-%, besonders bevorzugt zu mehr als 90,5 Gew.-%, darüber hinaus bevorzugt zu mehr als 92 Gew.-% und darüber hinaus besonders bevorzugt zu mehr als 95 Gew.-% Superabsorberfeinteilchen, wobei
(A1) die Superabsorberfeinteilchen zu mindestens 40 Gew.-%, bevorzugt zu mindestens 70 Gew.-%, besonders bevorzugt zu mindestens 90 Gew.-% und darüber hinaus bevorzugt zu 100 Gew.-%, jeweils bezogen auf das Gesamtgewicht der Superabsorberfeinteilchen, eine Partikelgröße von weniger als 150 µm, bestimmt gemäß ERT 420.1-99, aufweisen und die mindestens teilweise an eine Matrix aus einem vernetzten Polymer angrenzen, wobei vorzugsweise mindestens 0,1 Gew.-%, weiterhin bevorzugt mindestens 1 und darüber hinaus bevorzugt mindestens 4 Gew.-%, jeweils bezogen auf die Superabsorberpartikel, vernetztes Polymer die Matrix bilden,
(A2) das vernetzte Polymer zu mindestens 20 Gew.-%, bevorzugt zu mindestens 50 Gew.-%, besonders bevorzugt zu mindestens 80 Gew.-% und ferner bevorzugt mindestens 90 Gew.-%, jeweils bezogen auf das Gesamtgewicht des vernetzten Polymers, auf polymerisierten säuregruppentragenden Monomeren oder deren Salzen basiert,
(A3) das vernetzte Polymer eine andere chemische Zusammensetzung aufweist als die Superabsorberfeinteilchen oder sich in einer physikalischen Eigenschaft von den Superabsorberfeinteilchen unterscheidet, und
(A4) die Superabsorberpartikel nach einmaliger Durchführung des hierin beschriebenen Stabilitätstestes einen Anteil an Partikel mit einer Partikelgröße von weniger als 150 µm, bestimmt gemäß ERT 420.1-99, von weniger 50 Gew.-%, bevorzugt weniger als 30 Gew.-%, besonders bevorzugt weniger als 25 Gew.-%, darüber hinaus bevorzugt weniger als 20 Gew.-%, darüber hinaus noch mehr bevorzugt weniger als 15 Gew.-% und am meisten bevorzugten von weniger als 10 Gew.-%, jeweils bezogen auf das Gesamtgewicht der Superabsorberpartikel, aufweisen.

Die Erfindung betrifft auch Superabsorberpartikel umfassend Superabsorberfeinteilchen, die zu mindestens 40 Gew.-%, bevorzugt zu mindestens 70 Gew.-%, besonders bevorzugt zu mindestens 90 Gew.-% und darüber hinaus bevorzugt zu 100 Gew.-%, jeweils bezogen auf das Gesamtgewicht der Superabsorberfeinteilchen, eine Partikelgröße von weniger als 150 µm, bestimmt gemäß ERT 420.1-99, aufweisen und die mindestens teilweise an eine Matrix aus einem vernetzten Polymer angrenzen, wobei
(B1) das vernetzte Polymer zu mindestens 20 Gew.-%, bevorzugt zu mindestens 50 Gew.-% besonders bevorzugt zu mindestens 80 Gew.-% und ferner bevorzugt mindestens 90 Gew.-%, jeweils bezogen auf das Gesamtgewicht des vernetzten Polymers, auf ethylenischen, säuregruppentragenden Monomeren oder deren Salzen basiert,
(B2) das vernetzte Polymer eine andere chemische Zusammensetzung aufweist als die Superabsorberfeinteilchen oder sich in einer physikalischen Eigenschaft von den Superabsorberfeinteilchen unterscheidet, und
(B3) die Matrix neben dem vernetzten polymer einen Effektstoff, basierend auf einem Polyzucker oder einer Silizium-Sauerstoff beinhaltenden Verbindung oder eine Mischung aus mindestens zwei davon, beinhaltet.

Die Effektstoffe sind vorzugsweise in einer Menge in einem Bereich von 0,1 bis 50 Gew.-%, besonders bevorzugt in einem Bereich von 1 bis 40 Gew.-% und darüber hinaus bevorzugt in einer Menge in einem Bereich von 5 bis 30 Gew.-%, jeweils bezogen auf das Gesamtgewicht aus Superabsorberfeinteilchen und vernetztem Polymer, enthalten.
Als Superabsorberfeinteilchen, die in den beiden vorstehend beschriebenen Superabsorberpartikeln enthalten sind, sind dabei diejenigen bevorzugt, die bereits im Zusammenhang mit den vorstehend beschriebenen Verfahren zur Herstellung von Superabsorberpartikeln beschrieben wurden. Die vernetzten Polymere sind vorzugsweise diejenigen Polymere, die durch Vernetzung der im Zusammenhang mit dem erfindungsgemäßen Verfahren beschriebenen vernetzbaren, nicht vernetzten Polymere in Gegenwart von Superabsorberfeinteilchen erhalten werden könne. Die Effektstoffe, die in den zuletzt genannten, erfindungsgemäßen Superabsorberpartikeln enthalten sind, entsprechen vorzugsweise denjenigen Effektstoffen, die bereits im Zusammenhang mit den erfindungsgemäßen Verfahren zur Herstellung von Superabsorberpartikeln beschrieben wurden, wobei als Effektstoffe besonders bevorzugt Zeolithe enthalten sind. Weiterhin hat die Matrix die Funktion, die einzelnen Superabsorberfeinteilchen sowie die ggf. vorhandenen Effektstoffe fest mit einander zu verbinden bzw. zu agglomerieren.

Bevorzugte physikalische Eigenschaften, in denen sich das vernetzte Polymer und die Superabsorberfeinteilchen unterscheiden, sind die Ladungsdichte, der Vemetzungsgrad oder unterschiedliche Reflektion oder Absorption elektromagnetischer Wellen. Zur Bestimmung dieser unterschiedlichen Eigenschaften können beispielsweise Mikroskop- oder Kernresonanzuntersuchungen eingesetzt werden.

Es ist weiterhin bevorzugt, dass das vernetzte Polymer in einer Menge in einem Bereich von 1 bis 50 Gew.-%, besonders bevorzugt in einer Menge in einem Bereich von 3 bis 30 Gew.-% und darüber hinaus bevorzugt in einer Menge in einem Bereich von 5 bis 20 Gew.-%, bezogen auf das Gesamtgewicht aus vernetztem Polymer und Superabsorberfeinteilchen, enthalten ist.

Es ist außerdem bevorzugt, dass die vorstehend beschriebenen erfindungsgemäßen Superabsorberpartikel umfassend die Superabsorberfeinteilchen einen Innenbereich und einen den Innenbereich begrenzenden Oberflächenbereich aufweisen und wobei der Oberflächenbereich eine andere chemische Zusammensetzung als der Innenbereich aufweist oder sich in einer physikalischen Eigenschaft vom Innenbereich unterscheidet. Physikalische Eigenschaften, in denen sich der Innenbereich vom Oberflächenbereich unterscheidet, sind beispielsweise die Ladungsdichte oder der Vernetzungsgrad.

Diese einen Innenbereich und einen den Innenbereich begrenzenden Oberflächenbereich aufweisenden erfindungsgemäßen Superabsorberpartikel sind vorzugsweise dadurch erhältlich, dass oberflächennahe, reaktive Gruppen der Superabsorberpartikel nach dem Verfahrensschritt (B) nachvemetzt werden. Das genaue Verfahren der Nachvernetzung und die dazu vorzugsweise verwendeten Nachvernetzer entsprechen dabei vorzugsweise demjenigen Verfahren bzw. denjenigen Nachvernetzem, die bereits im Zusammenhang mit der Nachvemetzung des Polymers (P) bzw. der Superabsorberfeinteilchen beschrieben wurden.

In einer bevorzugten Ausführungsform der vorstehend beschriebenen Superabsorberpartikel weisen diese mindestens eine, vorzugsweise jede, der folgenden Eigenschaften auf:
a1) eine Partikelgrößenverteilung, bei der mindestens 80 Gew.-%, vorzugsweise mindestens 90 Gew.-% und darüber hinaus bevorzugt mindestens 95 Gew.-% der Partikel eine Partikelgröße in einem Bereich von 20 µm bis 5 mm, vorzugsweise im Bereich von 150 µm bis 1 mm und besonders bevorzugt im Bereich von 200 µm bis 900µm nach ERT 420.1-99 besitzen;
a2) eine *Centrifuge Retention Capacity* (CRC) von mindestens 5 g/g, vorzugsweise mindestens 10 g/g und besonders bevorzugt in einem Bereich von 20 bis 100 g/g nach ERT 441.1-99;
a3) eine *Absorbency Against Pressure* (AAP) bei 0,7 psi von mindestens 5 g/g, vorzugsweise mindestens 7 g/g und besonders bevorzugt in einem Bereich von 15 bis 100 g/g nach ERT 442-1.99;
a4) einen Gehalt an wasserlöslichem Polymer nach 16 Stunden Extraktion von weniger als 25 Gew.-%, vorzugsweise weniger als 20 Gew.-% und besonders bevorzugt weniger als 18 Gew.-%, bezogen auf das Gesamtgewicht der Superabsorberpartikel, nach ERT 470.1-99.

Jeder der aus den Merkmalen a1 bis a4 ergebenden Merkmalskombinationen stellen eine erfindungsgemäße bevorzugte Ausführungsform dar, wobei die nachstehenden Merkmale oder Merkmalskombinationen besonders bevorzugte Ausführungsformen darstellen: a4, a1a2, a1a2a3, a1a2a3a4, a1a3, a1a4, a1a3a4, a1a2a4, a2a3, a2a3a4, a2a4 sowie a3a4, wobei a4 und alle der vorstehenden Kombinationen mit a4 besonders bevorzugt sind.

Es ist weiterhin bevorzugt, dass die vorstehend beschriebenen erfindungsgemäßen Superabsorberpartikel die gleichen Eigenschaften aufweisen wie die durch die erfindungsgemäßen Verfahren erhältlichen Superabsorberpartikel. Es ist auch erfindungsgemäß bevorzugt, dass diejenigen Werte, die im Zusammenhang mit den erfindungsgemäßen Verfahren und den erfindungsgemäßen Superabsorberpartikeln als Untergrenzen von erfindungsgemäßen Merkmalen ohne Obergrenzen angegeben wurden, das 20-fache, vorzugsweise das 10-fache und besonders bevorzugt das 5-fache des am meisten bevorzugten Wertes der Untergrenze besitzen.

Die vorliegende Erfindung betrifft weiterhin einen Verbund, beinhaltend die erfindungsgemäßen Superabsorberpartikel und ein Substrat. Es ist dabei bevorzugt, dass die erfindungsgemäßen Superabsorberpartikel und das Substrat miteinander fest verbunden sind. Als Substrate sind Folien aus Polymeren, wie beispielsweise aus Polyethylen, Polypropylen oder Polyamid, Metalle, Vliese, Fluff, Tissues, Gewebe, natürliche oder synthetische Fasern, oder andere Schäume bevorzugt.

Die Erfindung betrifft weiterhin Verfahren zur Herstellung eines Verbundes, wobei die erfindungsgemäßen Superabsorberpartikel und ein Substrat und gegebenenfalls ein Zusatzstoff miteinander in Kontakt gebracht werden. Als Substrate werden vorzugsweise diejenigen Substrate eingesetzt, die bereits vorstehend im Zusammenhang mit dem erfindungsgemäßen Verbund genannt wurden.

Die Erfindung betrifft auch einen Verbund erhältlich nach dem vorstehend beschriebenen Verfahren.

Die Erfindung betrifft auch chemische Produkte beinhaltend die erfindungsgemäßen Superabsorberpartikel oder einen erfindungsgemäßen Verbund. Bevorzugte chemische Produkte sind insbesondere Schäume, Formkörper, Fasern, Folien, Filme, Kabel, Dichtungsmaterialien, flüssigkeitsaufnehmenden Hygieneartikel, Träger für pflanzen- oder pilzwachstumsregulierende Mittel oder Pflanzenschutzwirkstoffe, Zusätze für Baustoffe, Verpackungsmaterialien oder Bodenzusätze.

Die Erfindung betrifft weiterhin die Verwendung der erfindungsgemäßen Superabsorberpartikel oder des erfindungsgemäßen Verbundes in chemischen Produkten, vorzugsweise in den vorstehend genannten chemischen Produkten, sowie die Verwendung der erfindungsgemäßen Superabsorberpartikel als Träger für pflanzen- oder pilzwachstumsregulierende Mittel oder Pflanzenschutzwirkstoffe. Bei der Verwendung als Träger für pflanzen- oder pilzwachstumsregulierende Mittel oder Pflanzenschutzwirkstoffe ist es bevorzugt, dass die pflanzen- oder pilzwachstumsregulierende Mittel oder Pflanzenschutzwirkstoffe über einen durch den Träger kontrollierten Zeitraum abgegeben werden können.

Weiterhin betrifft die vorliegende Erfindung die Verwendung eines Fluids beinhaltend
- ein vernetzbares, nicht vernetztes Polymer, welches zu mindestens 20 Gew.-%, bevorzugt zu mindestens 30 Gew.-% und besonders bevorzugt zu mindestens 50 Gew.-%, jeweils bezogen auf das Gesamtgewicht des vernetzbaren, nicht vernetzten Polymers, auf ethylenischen, säuregruppentragenden Monomeren oder deren Salzen basiert, und welches neben den polymerisierten, ethylenisch ungesättigten, säuregruppentragenden Monomeren weitere polymerisierte, ethylenisch ungesättigte Monomere (M) umfasst, die mit polymerisierten säuregruppentragenden Monomeren in einer Kondensationsreäktion, in einer Additionsreaktion oder in einer Ringöffnungsreaktion reagieren können, und gegebenenfalls
- einen Vernetzer,
zur Einstellung mindestens einer der folgenden Eigenschaften:
B1) Abriebfestigkeit von Superabsorberpartikeln, die Superabsorberfeinteilchen umfassen,
B2) mittlere Partikelgröße von Superabsorberpartikeln, die Superabsorberfeinteilchen umfassen,
oder zur Agglomeration von Superabsorberfeinteilchen und Effektstoffen.

Weiterhin betrifft die Erfindung die Verwendung der erfindungsgemäßen Superabsorberpartikel in Hygieneprodukten, zur Hochwasserbekämpfung, zur Isolierung gegen Wasser, zur Regulierung des Wasserhaushalts von Böden oder zur Behandlung von Lebensmitteln.

### TESTMETHODEN

Sofern nicht nachfolgend anders angegeben, werden die hierin erfolgten Messungen nach ERT-Verfahren. "ERT" steht für *EDANA Recommended Test* und "EDANA" für *European Disposable and Nonwoven Association.*

### STABILITÄTSTEST

127 g eines Mahlmittels (24 zylindrische Porzellanstücke, U.S. Stoneware 1/2 " O.D..1/2 ") sowie 10 g der superabsorbierenden Polymerpartikel mit einer Korngröße von 150 bis 850 µm wurden in einen Kugelmühlentopf eingewogen. Der Kugelmühlentopf wurde verschlossen und für 6 Minuten auf einer Walzenmühle bei 95 Upm rotiert. Der mechanisch belastete Superabsorber wurde dem Topf entnommen und hinsichtlich der Kornverteilung mittels eines 100-mesh-Siebes analysiert. Durch die Bestimmung des Anteils der Partikel, die beim Sieben der superabsorbierenden Polymerpartikeln mit dem 100-*mesh*-Siebgemäß gemäß den Vorschriften der ERT 420.1-99 auf dem Sieb zurückgehalten wurden (und die demnach eine Partikelgröße von mehr als 150 µm aufwiesen) konnte unter Berücksichtigung der Menge an eingesetzten superabsorbierenden Polymerpartikeln der Anteil bestimmt werden, der eine Partikelgröße von weniger als 150 µm aufwies.

### BEISPIELE

### I. HERSTELLUNG DER SUPERABSORBERFEINTEILCHEN

300 g Acrylsäure wurden in zwei Portionen geteilt. Eine Portion wurde in 429,1 g destilliertes Wasser gegeben. 0,36 g Triallyamin, 1,05 g Allyloxpolyethylenglykolacrylsäureester und 12 g Methoxypolethyleneglykol(22EO)methacrylat wurden in der zweiten Portion Acrylsäure gelöst und ebenfalls dem Wasser hinzugefügt. Die Lösung wurde auf 10°C gekühlt. Anschließend wurden unter Kühlung insgesamt 233,1 g 50%ige Natronlauge so langsam zugesetzt, dass die Temperatur nicht über 30°C stieg. Anschließend wurde die Lösung bei 20 °C mit Stickstoff gespült und dabei weiter abgekühlt. Bei Erreichen der Starttemperatur von 4°C wurden 0,9 g Natriumcarbonat und die Initiatorlösungen (0,1 g 2,2'-Azobis-2-amidinopropandihydrochlorid in 10 g destilliertes Wasser, 0,15 g Natriumperoxodisulfat in 10 g destilliertes Wasser und 0,1 g 30%ige Wasserstoffperoxidlösung in 1 g destilliertes Wasser und 0,01 g Ascorbinsäure in 2 g Wasser) zugesetzt- Nachdem die. Endtemperatur erreicht war, wurde das entstandene Gel zerkleinert und bei 150°C über 90 Minuten getrocknet. Das getrocknete Produkt wurde grob zerstoßen, gemahlen und entsprechend den Angaben in der Tabelle 1 abgesiebt.

### II. AGGLOMERATION VON SUPERABSORBERFEINTEILCHEN IN ABWESENHEIT VON EFFEKTSTOFFEN

### BEISPIEL 1

In einem Wirbelschichtcoater Unilab-5-TJ der Firma Hüttlin (BWI Hüttlin, Daimlerstraße 7, D-79585 Steinen) wurden 1.600 g Superabsorber-Feinteilchen der in Tabelle 1 angegebenen Kornverteilung aus Herstellungsbeispiel I mit 400 g einer 20%igen Lösung einer zu 50 Mol-% mit Natriumhydroxid neutralisierten nicht vernetzten Polyacrylsäure (M_{w} ca. 100.000 g/mol), die zusätzlich 2% Polyglycol 300 als Vernetzer enthielt, innerhalb von 20 Minuten besprüht. Die Zulufttemperatur betrug 50°C, die Produkttemperatur 30 bis 35°C. Es wurden 1.698 g Endprodukt erhalten. Der Wassergehalt war gegenüber dem Wassergehalt der eingesetzten Polymerfeinteilchen um 1 % erhöht. Das Produkt wurde 10 Minuten in einem Umluftschrank bei 190°C gehalten. Die Veränderungen der Korngrößenverteilung der erhaltenen Reaktionsprodukte ergibt sich aus der Tabelle 1.

**Tabelle 1**

| Kornverteilung [µm] | >850 | <850 >600 | <600 >300 | <300 >150 | <150 |
|---|---|---|---|---|---|
| vor Besprühen mit der Polyacrylat-Lösung [Gew. %] | 0,1 | 0,4 | 0,6 | 56,5 | 42,4 |
| nach Besprühen mit der Polyacrylatlösung [Gew. %] | 0,2 | 4,6 | 28,6 | 64,9 | 1,7 |

### BEISPIEL 2

In einem Labor-MIT-Mischer (MIT-Mischtechnik, Industrieanlagen GmbH, Typ LM 1,5/5, Baujahr 1995) wurden 500 g der SuperabsorberFeinteilchen der in Tabelle 2 angegebenen Kornverteilung aus Herstellungsbeispiel I mit 175 g einer 20%igen Lösung einer zu 50 Mol-% mit Natriumhydroxid neutralisierten nicht vernetzten Polyacrylsäure (M_{w} ca. 100.000 g/mol), die zusätzlich 1,8 Gew.-% 1,4-Butandiol Vernetzer enthielt, innerhalb von 20 Minuten besprüht. Und anschließend 30 Minuten bei 140°C getrocknet. Die Veränderungen der Korngrößenverteilung der erhaltenen Reaktionsprodukte ergibt sich aus der Tabelle 2.

**Tabelle 2**

| Kornverteilung [µm] | >850 | <850 >600 | <600 >300 | <300 >150 | <150 |
|---|---|---|---|---|---|
| vor Besprühen mit der Polyacrylat-Lösung [Gew.%] | 0,1 | 0,2 | 0,4 | 54,3 | 45,7 |
| nach Besprühen mit der Polyacrylatlösung [Gew. %] | 3,3 | 34,4 | 32,6 | 28,5 | 1,2 |

### BEISPIEL 3

In einem Labor-MIT-Mischer (MIT-Mischtechnik, Industrieanlagen GmbH, Typ LM 1,5/5, Baujahr 1995) wurden 150 g der SuperabsorberFeinteilchen der in Tabelle 3 angegebenen Kornverteilung aus Herstellungsbeispiel I mit 50 g einer 20%igen Lösung einer zu 50 Mol-% mit Natriumhydroxid neutralisierten nicht vernetzten Polyacrylsäure (M_{w} ca. 130.000 g/mol), die zusätzlich 8,5 Gew.-% Polyethylenglycol 300, bezogen auf das Gewicht der nicht vernetzten Polyacrylsäure, als Vernetzer enthielt, innerhalb von 20 Minuten besprüht und anschließend für die in der Tabelle 3 angegebene Dauer und Temperatur im Umluftschrank getrocknet. Die Eigenschaften der erhaltenen Reaktionsprodukte ergeben sich aus der Tabelle 3.

**Tabelle 3**

| Trocknung | 30min/140°C | 30min/160°C | 30min/180°C0 | eingesetzte Feinteilchen nach Herstellungsbsp. I |
|---|---|---|---|---|
| Stabilität | 17 Gew.-% | 18 Gew.-% | 17Gew.-% | |
| CRC-Wert | 21,1 g/g | 21,1 g/g | 17,8 g/g | 23 g/g |
| AAP-Wert | 9,9 g/g | 9,6 g/g | 11,7 g/g | 18,9 g/g |
| Lösl. Anteil | 19,8 Gew.-% | 18,6 Gew.-% | 17,5 Gew.-% | 11,2 Gew.-% |
| Wassergehalt | 4,1 Gew.-% | 3,4 Gew.-% | 2,1 Gew.-% | 3 Gew.-% |

### III. NACHVERNETZUNG AGGLOMERIERTER SUPERABSORBERFEINTEILCHEN

In einem Rührbecher werden zu 50 g des im Beispiel 1 erhaltenen Agglomerats mittels einer Spritze unter Rühren mit einem Krupps 3-Mix-Rührer bei höchster Stufe eine Lösung von 250 mg Ethylencarbonat in einer Mischung von 1 g destilliertem Wasser und 2 g Aceton zugesetzt und das Agglomerat weitere 30 Sekunden gerührt. Das Produkt wurde 30 Minuten stehen gelassen und anschließend über 30 Minuten bei 190°C in einem Umlufttrockenschrank getrocknet. Die Änderungen in den Absorptionseigenschaften ergeben sich aus der folgenden Tabelle 4:

**Tabelle 4**

| Reaktionsprodukt | CRC [g/g] | AAP 0,7 psi [g/g] |
|---|---|---|
| Superabsorberfeinteilchen | 30,5 | 9,5 |
| Agglomerat | 24,8 | 10,1 |
| nachvemetztes Agglomerat | 21,5 | 19,0 |

### IV. AGGLOMERATION VON SUPERABSORBERFEINTEILCHEN IN ANWESENHEIT VON EFFEKTSTOFFEN

### BEISPIEL 5

In einem bereits unter Beispiel 2 beschriebenen Labor-MIT-Mischer wurden 750 g Superabsorberfeinteilchen aus Herstellungsbeispiel I vorgelegt und 1.500 U/m mit 62,5 g des Zeolith Abscents 3000 versetzt. Die Mischung wurde mit 200 g einer 20%igen zu 50 Mol-% mit Natriumhydroxid teilneutralisierten nichtvernetzten Polyacrylsäurelösung (M_{w} ca. 130000 g/mol), die 3,4 Polyethylenglycol-300 als Vernetzer enthielt, besprüht und anschließend 30 Minuten bei 180°C in einem Umlufttrockenschrank getrocknet. Die Teilchen, die größer als 150 µm waren, wurden in Schlagkranzmühle gemahlen. Die Ergebnisse sind in Tabelle 5 zusammengefasst.

**Tabelle 5**

| Eigenschaften | Agglomerat 3 |
|---|---|
| Anteil der Partikel < 150 µm (vor dem Zermahlen) | 3,7 Gew.-% |
| Anteil der Partikel < 150 µm (nach dem Zermahlen) | 11,2 Gew.-% |
| Anteil der Partikel > 850 µm (vor dem Zermahlen) | 34 Gew.-% |
| Anteil der Partikel zwischen 150 µm und 850 µm (nach dem Zermahlen) | 88,8 Gew.-% |
| Stabilitätswert | 15 Gew.-% |
| CRC-Wert | 25,5 g/g |
| AAP-Wert bei 0,7 psi | 10,6 g/g |
| Löslicher Anteil | 19,8 Gew.-% |

## Patentansprüche

1. Ein Verfahren zur Herstellung eines agglomerierten Superabsorberpartikels, umfassend als Schritte
(A) das in Kontakt bringen von Superabsorberfeinteilchen, die zu mindestens 40 Gew.-% eine Partikelgröße von weniger als 150 µm aufweisen, mit einem Fluid beinhaltend mehr als 10 Gew.-%, bezogen auf das Gesamtgewicht des Fluids, eines vernetzbaren, nicht vernetzten Polymers, welches zu mindestens 20 Gew.-%, bezogen auf das Gesamtgewicht des vernetzbaren, nicht vernetzten Polymers, auf polymerisierten, ethylenisch ungesättigten, säuregruppentragenden Monomeren oder deren Salzen basiert,
(B) das Vernetzen des nicht vernetzten Polymers durch Erhitzen der mit dem Fluid in Kontakt gebrachten Superabsorberfeinteilchen auf eine Temperatur in einem Bereich von 20 bis 300°C, so dass das vernetzbare, nicht vernetzte Polymer mindestens teilweise vernetzt wird,
wobei
(a) das vernetzbare, nichtvernetzte Polymer neben den polymerisierten, ethylenisch ungesättigten, säuregruppentragenden Monomeren weitere polymerisierte, ethylenisch ungesättigte Monomere (M) umfasst, die mit polymerisierten säuregruppentragenden Monomeren in einer Kondensationsreaktion, in einer Additionsreaktion oder in einer Ringöffnungsreaktion reagieren können, und/oder
(b) das Fluid neben dem vernetzbaren, nicht vernetzten Polymer einen Vernetzer beinhaltet.

2. Verfahren nach Anspruch 1, wobei das vernetzbare, nicht vernetzte Polymer ein Gewichtsmittel des Molekulargewicht von mehr als 8.000 g/mol aufweist.

3. Verfahren nach Anspruch 1 oder 2, wobei das Monomer (M) ein polymerisiertes, ethylenisch ungesättigtes Umsetzungsprodukt von gesättigten aliphatischen, cycloalphatischen, aromatischen Alkohlen, Aminen oder Thiolen mit ethylenisch ungesättigten Carbonsäuren, Carbonsäurederivaten oder Allylhalogeniden ist

4. Verfahren nach einem der vorhergehenden Ansprüche, wobei die Superabsorberfeinteilchen einen Innenbereich und einen den Innenbereich begrenzenden Oberflächenbereich aufweisen und wobei der Oberflächenbereich eine andere chemische Zusammensetzung als der Innenbereich aufweist oder sich in einer physikalischen Eigenschaft vom Innenbereich unterscheidet.

5. Verfahren nach einem der vorhergehenden Ansprüche, wobei das in Kontakt bringen der Superabsorberfeinteilchen mit dem Fluid in Gegenwart eines auf einem Polyzucker oder einer Silizium-Sauerstoff beinhaltenden Verbindung oder einer Mischung von mindestens zwei davon basierenden Effektstoffes erfolgt.

6. Verfahren nach Anspruch 5, wobei der Effektstoff ein Zeolith ist.

7. Verfahren nach einem der vorhergehenden Ansprüche, wobei das in Kontakt bringen in einer Wirbelschicht erfolgt.

8. Verfahren nach einem der vorhergehenden Ansprüche, wobei während oder nach Schritt (B) als Schritt (C) ein Nachvernetzer zugegeben wird.

9. Superabsorberpartikel, erhältlich durch ein Verfahren nach einem der vorhergehenden Ansprüche.

10. Superabsorberpartikel beinhaltend zu mehr als 75 Gew.-% Superabsorberfeinteilchen, wobei
(A1) die Superabsorberfeinteilchen zu mindestens 40 Gew.-%, bezogen auf das Gesamtgewicht der Superabsorberfeinteilchen, eine Partikelgröße von weniger als 150 µm aufweisen und die mindestens teilweise an eine Matrix aus einem vernetzten Polymer angrenzen,
(A2) wobei das vernetzte Polymer zu mindestens 20 Gew.-%, bezogen auf das Gesamtgewicht des vernetzten Polymers, auf polymerisierten säuregruppentragenden Monomeren oder deren Salzen basiert,
(A3) das vernetzte Polymer eine andere chemische Zusammensetzung aufweist als die Superabsorberfeinteilchen oder sich in einer physikalischen Eigenschaft von den Superabsorberfeinteilchen unterscheidet, und
(A4) wobei das Superabsorberpartikel nach einmaliger Durchführung des hierin beschriebenen Stabilitätstestes einen Anteil an Partikel mit einer Partikelgröße von weniger als 150 µm von weniger 50 Gew.-% aufweist.

11. Superabsorberpartikel umfassend Superabsorberfeinteilchen, die zu mindestens 50 Gew.-%, bezogen auf das Gesamtgewicht der Superabsorberfeinteilchen, eine mittlere Partikelgröße von weniger als 150 µm aufweisen und die an eine Matrix aus einem vernetzten Polymer angrenzen, wobei
(B1) das vernetzte Polymer zu mindestens 20 Gew.-%, bezogen auf das Gesamtgewicht des vernetzten Polymers, auf ethylenischen, säuregruppentragenden Monomeren oder deren Salzen basiert,
(B2) das vernetzte Polymer eine andere chemische Zusammensetzung aufweist als die Superabsorberfeinteilchen oder sich in einer physikalischen Eigenschaft von den Superabsorberfeinteilchen unterscheidet, und wobei
(B3) die Matrix neben dem vernetzten Polymer einen Effektstoff, basierend auf einem Polyzucker oder einem Polyalkyletherpolyol oder einer Silizium-Sauerstoff beinhaltenden Verbindung oder einer Mischung von mindestens zwei davon, beinhaltet.

12. Superabsorberpartikel nach einem der Ansprüche 9 bis 11, wobei die Superabsorberfeinteilchen einen Innenbereich und einen den Innenbereich begrenzenden Oberflächenbereich aufweisen und wobei der Oberflächenbereich eine andere chemische Zusammensetzung als der Innenbereich aufweist oder sich in einer physikalischen Eigenschaft vom Innenbereich unterscheidet.

13. Superabsorberpartikel nach einem der Ansprüche 9 bis 12, wobei die Superabsorberpartikel einen Innenbereich und einen den Innenbereich begrenzenden Oberflächenbereich aufweisen und wobei der Oberflächenbereich eine andere chemische Zusammensetzung als der Innenbereich aufweist oder sich in einer physikalischen Eigenschaft vom Innenbereich unterscheidet.

14. Superabsorberpartikel nach einem der Ansprüche 9 bis 13, wobei die Superabsorberpartikel mindestens eine der folgenden Eigenschaften aufweisen:
a1) eine Partikelgrößenverteilung, wonach mindestens 80 Gew.-% der Partikel eine Partikelgröße in einem Bereich von 20 µm bis 5 mm besitzen;
a2) eine *Centrifuge Retention Capacity* (CRC) von mindestens 5 g/g;
a3) eine *Absorption Against Pressure* (AAP) bei 0,7 psi von mindestens 5 g/g;
a4) einen Gehalt an wasserlöslichem Polymer nach 16 Stunden Extraktion von weniger als 25 Gew.-%.

15. Ein Verbund, beinhaltend die Superabsorberpartikel nach einem der Ansprüche 9 bis 14 und ein Substrat.

16. Ein Verfahren zur Herstellung eines Verbundes, wobei die Superabsorberpartikel nach einem der Ansprüche 7 bis 12 und ein Substrat und gegebenenfalls ein Zusatzstoff miteinander in Kontakt gebracht werden.

17. Ein Verbund erhältlich nach dem Verfahren gemäß Anspruch 16.

18. Verwendung der Superabsorberpartikel nach einem der Ansprüche 7 bis 12 oder des Verbundes nach Anspruch 13 oder 15 in Hygieneprodukten, zur Hochwasserbekämpfung, zur Isolierung gegen Wasser, zur Regulierung des Wasserhaushalts von Böden oder zur Behandlung von Lebensmitteln.

## Claims

1. A process for producing an agglomerated superabsorber particle, comprising as steps
(A) bringing superabsorber fine particles which have to at least 40 wt.% a particle size of less than 150 µm, into contact with a fluid comprising more than 10 wt.%, based on the total weight of the fluid, a cross-linkable, uncrosslinked polymer, which polymer is based on polymerised, ethylenically unsaturated, acid groups-bearing monomers or salts thereof to at least 20 wt.%, based on the total weight of the cross-linkable, uncrosslinked polymer,
(B) cross-linking the uncrosslinked polymer by heating the superabsorber fine particles brought into contact with the fluid to a temperature within a range from 20 to 300 °C, so that the cross-linkable, uncrosslinked polymer is at least partially crosslinked,
wherein
(a) the cross-linkable, uncrosslinked polymer comprises, besides the polymerised, ethylenically unsaturated, acid groups-bearing monomers, further polymerised, ethylenically unsaturated monomers (M) which can react with polymerised acid group-bearing monomers in a condensation reaction, in an addition reaction or in a ring opening reaction, and/or
(b) the fluid comprises, beside the cross-linkable, uncrosslinked polymer, a crosslinker.

2. Process according to claim 1, wherein the cross-linkable, uncrosslinked polymer has a weight average molecular weight of more than 8000 g/mol.

3. Process according to claim 1 or 2, wherein the monomer (M) is a polymerised, ethylenically unsaturated conversion product of saturated aliphatic, cycloaliphatic, aromatic alcohols, amines or thiols with ethylenically unsaturated carboxylic acid, carboxylic acid derivatives or allyl halides.

4. Process according to any one of the preceding claims, wherein the superabsorber fine particles comprise an inner portion and a surface portion bordering the inner portion and wherein the surface portion comprises a different chemical composition that the inner portion or differs from the inner portion in a physical property.

5. Process according to any one of the preceding claims, wherein the bringing into contact of the superabsorber fine particles with the fluid occurs in the presence of an effect material based on a polysugar or on a silicon-oxygen-comprising compound or on a mixture of at least two thereof.

6. Process according to claim 5, wherein the effect material is a zeolite.

7. Process according to any one of the preceding claims, wherein the bringing into contact occurs in a fluidised bed.

8. Process according to any one of the preceding claims, wherein during or after step (B) a postcrosslinker is added as step (C).

9. Superabsorber particle obtainable by a process according to any one of the preceding claims.

10. Superabsorber particle comprising to more than 75 wt.% superabsorber fine particles, wherein
(A1) the superabsorber fine particles have, to at least 40 wt.% based on the total weight of the superabsorber fine particles, a particle size of less than 150 µm and abut at least partially onto a matrix of a crosslinked polymer,
(A2) wherein the crosslinked polymer is based to at least 20 wt.%, based on the total weight of the crosslinked polymer, on polymerised acid group-bearing monomers or salts thereof,
(A3) the crosslinked polymer comprises a different chemical composition to the superabsorber fine particles or differs from the superabsorber fine particles in a physical property, and
(A4) wherein the superabsorber particle comprises a portion of particles with a particle size of less than 150 µm of less than 50 wt.% after carrying out once the stability test described herein.

11. Superabsorber particle comprising superabsorber fine particles which have, to at least 50 wt.% based on the total weight of the superabsorber fine particles, an average particle size of less than 150 µm and which abut onto a matrix of a crosslinked polymer, wherein
(B1) the crosslinked polymer is based to at least 20 wt.%, based on the total weight of the crosslinked polymer, on ethylenic acid group-bearing monomers or salts thereof,
(B2) the crosslinked polymer comprises a different chemical composition to the superabsorber fine particles or differs from the superabsorber fine particles in a physical property, and wherein
(B3) the matrix comprises, besides the crosslinked polymer, an effect material based on a polysugar or on a polyalkylether polyol or on a silicon-oxygen-comprising compound or on a mixture of at least two thereof.

12. Superabsorber particle according to any one of claims 9 to 11, wherein the superabsorber fine particles comprise an inner portion and a surface portion bordering the inner portion and wherein the surface portion comprises a different chemical composition to the inner portion or differs from the inner portion in a physical property.

13. Superabsorber particle according to any one of claims 9 to 12, wherein the superabsorber particles comprise an inner portion and a surface portion bordering the inner portion and wherein the surface portion comprises a different chemical composition to the inner portion or differs from the inner portion in a physical property.

14. Superabsorber particles according to any one of claims 9 to 13, wherein the superabsorber particles have at least one of the following properties:
a1) a particle size distribution, whereby at least 80 wt.% of the particles have a particle size within a range of 20 µm to 5 mm;
a2) a Centrifuge Retention Capacity (CRC) of at least 5 g/g;
a3) an Absorption Against Pressure (AAP) at 0.7 psi of at least 5 g/g;
a4) a water-soluble polymer content of less than 25 wt.% after 16 hours extraction.

15. A composite comprising the superabsorber particles according to any one of claims 9 to 14 and a substrate.

16. A process for producing a composite, wherein the superabsorber particles according to any one of claims 7 to 12 and a substrate and optionally an additive are brought into contact with each other.

17. A composite obtainable according to the process according to claim 16.

18. Use of the superabsorber particles according to any one of claims 7 to 12 oor of the composite according to claim 13 or 15 in hygiene products, for combating floods, for insulation against water, for regulating the water management of soils or for treating food products.

## Revendications

1. Procédé destiné à la fabrication d'une particule agglomérée superabsorbante, comportant comme étapes :
(A) la mise en contact de particules fines superabsorbantes, qui ont à moins 40 % en poids une grandeur de particules de moins que 150 µm, avec un fluide contenant plus que 10 % en poids, par rapport au poids total du fluide, d'un polymère réticulable, non réticulé, qui est basé à au moins 20 % en poids, par rapport au poids total du polymère réticulable, non-réticulé, sur des monomères polymérisés, éthyléniquement insaturés, portant des groupes acides, ou sur leurs sels.
(B) la réticulation du polymère non-réticulé par le réchauffement à une température dans une gamme de 20 à 300°C des particules fines superabsorbantes mises en contact avec le fluide, de sorte que le polymère réticulable, non-réticulé est réticulé au moins partiellement,
dans quel cas
(a) outre les monomères polymérisés, éthyléniquement insaturés, portant des groupes acides, le polymère réticulable, non-réticulé comporte d'autres monomères (M) polymérisés, éthyléniquement insaturés, qui peuvent réagir dans une réaction de condensation, dans une réaction d'addition ou dans une réaction de décyclisation avec des monomères polymérisés, portant des groupes acides, et/ou
(b) outre le polymère réticulable, non-réticulé, le fluide contient un agent de réticulation.

2. Procédé selon la revendication 1, dans le cas duquel le polymère réticulable, non-réticulé a une moyenne de poids du poids moléculaire de plus que 8.000 g/mol.

3. Procédé selon la revendication 1 ou 2, dans le cas duquel le monomère (M) est un produit de transformation polymérisé, éthyléniquement insaturé d'alcools, d'amines ou de thiols saturés, aliphatiques, cycloaliphatiques, aromatiques avec des acides carboxyliques éthyléniquement insaturés, des dérivés d'acides carboxyliques ou des halogénures d'allyle.

4. Procédé selon l'une des revendications précédentes, dans le cas duquel les particules fines superabsorbantes ont une région intérieure et une région surfacique limitant la région intérieure et dans le cas duquel la région surfacique a une autre composition chimique que la région intérieure ou se distingue par une propriété physique de la région intérieure.

5. Procédé selon l'une des revendications précédentes, dans le cas duquel la mise en contact des particules fines superabsorbantes avec le fluide a lieu en présence d'un matériau d'effet basé sur un polysucre ou sur un composé comprenant du silicium-oxygène ou sur un mélange d'au moins deux de ces derniers.

6. Procédé selon la revendication 5, dans le cas duquel le matériau d'effet est un zéolithe.

7. Procédé selon l'une de revendications précédentes, dans le cas duquel la mise en contact est effectuée dans un lit fluidisé.

8. Procédé selon l'une des revendications précédentes, dans le cas duquel durant ou après l'étape (B) un agent de post-réticulation est ajouté comme étape (C).

9. Particules superabsorbantes pouvant être obtenues par un procédé selon l'une des revendications précédentes.

10. Particules superabsorbantes, comprenant à plus de 75 % en poids de particules fines superabsorbantes, dans quel cas
(A1) les particules fines superabsorbantes ont à au moins 40 % en poids par rapport au poids total des particules fines superabsorbantes, une grandeur de particule de moins que 150 µm et qui voisinent au moins partiellement avec une matrice d'un polymère réticulé,
(A2) dans quel cas le polymère réticulé est basé à au moins 20 % en poids, par rapport au poids total du polymère réticulé, sur des monomères polymérisés, portant des groupes acides ou sur leurs sels,
(A3) le polymère réticulé a une autre composition chimique que les particules fines superabsorbantes ou se distingue par une propriété physique des particules fines superabsorbantes,
et
(A4) dans quel cas la particule superabsorbante a une part de particules avec une grandeur de particules de moins que 150 µm de moins que 50 % en poids, après avoir exécuté une fois le test de stabilité décrit ici.

11. Particules superabsorbantes comportant des particules fines superabsorbantes qui ont à au moins 50 % en poids, par rapport au poids total des particules fines superabsorbantes, une grandeur de particules moyenne de moins que 150 µm et qui voisinent avec une matrice d'un polymère réticulé, dans quel cas
(B1) le polymère réticulé est basé à au moins 20 % en poids, par rapport au poids total du polymère réticulé, sur des monomères éthyléniques, portant des groupes acides et sur leurs sels,
(B2) le polymère réticulé a une autre composition chimique que les particules fines superabsorbantes ou se distingue des particules fines superabsorbantes par une propriété physique, et dans quel cas
(B3) outre le polymère réticulé la matrice comprend un matériau d'effet, basé sur un polysucre ou sur un polyalkyleétherpolyole ou sur une composition comprenant du silicium-oxygène ou sur un mélange d'au moins deux.

12. Particules superabsorbantes selon l'une des revendications 9 à 11, dans quel cas les particules fines superabsorbantes ont une région intérieure et une région surfacique limitant la région intérieure et dans quel cas la région surfacique a une autre composition chimique que la région intérieure ou se distingue par une propriété physique de la région intérieure.

13. Particules superabsorbantes selon l'une des revendications 9 à 12, dans quel cas les particules superabsorbantes ont une région intérieure et une région surfacique limitant la région intérieure et dans quel cas la région surfacique a une autre composition chimique que la région intérieure ou se distingue par une propriété physique de la région intérieure.

14. Particules superabsorbantes selon l'une des revendications 9 à 13, dans quel cas les particules superabsorbantes ont au moins une des propriétés suivantes :
a1) une distribution granulométrique, d'après laquelle 80 % en poids des particules ont une grandeur de particules dans une étendue de 20 µm à 5 µm ;
a2) une capacité de rétention centrifugale (CRC) (*Centrifuge Retention Capacity*) d'au moins 5 g/g ;
a3) une absorption contre la pression (AAP) (*Absorption Against Pressure*) à 0,7 psi d'au moins 5 g/g ;
a4) une teneur en polymère soluble à l'eau après 16 heures d'extraction de moins que 25 % en poids.

15. Un composite, comprenant les particules superabsorbantes selon l'une des revendications 9 à 14 et un substrat.

16. Procédé destiné à la fabrication d'un composite, dans le cas duquel les particules superabsorbantes selon l'une des revendications 7 à 12 et un substrat et le cas échéant un additif sont mis en contact.

17. Un composite pouvant être obtenu conformément à un procédé selon la revendication 16.

18. Utilisation des particules superabsorbantes selon l'une des revendications 7 à 12 ou du composite selon la revendication 13 ou 15 dans des produits d'hygiène, pour la lutte contre les crues, pour l'isolation contre l'eau, pour le réglage du régime des eaux de sols ou pour le traitement de denrées alimentaires.
